(19) Europäisches Patentamt
European Patent Office
Office européen des brevets

(11) **EP 3 726 439 B1**

(12) **EUROPEAN PATENT SPECIFICATION**

(45) Date of publication and mention
of the grant of the patent:
**01.03.2023 Bulletin 2023/09**

(21) Application number: **20169087.2**

(22) Date of filing: **09.04.2020**

(51) International Patent Classification (IPC):
***G06N 20/00*** (2019.01)

(52) Cooperative Patent Classification (CPC):
**H04L 67/12; G06N 3/045; G06N 3/088;
G06V 10/774; G06V 10/776; G06V 10/95;
G06V 20/56; H04L 67/10; H04W 4/38; H04W 4/70**

(54) **EDGE LEARNING**

KANTENLERNEN

APPRENTISSAGE EMBARQUÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.04.2019 US 201916386700**

(43) Date of publication of application:
**21.10.2020 Bulletin 2020/43**

(73) Proprietor: **HERE Global B.V.
5611 ZT Eindhoven (NL)**

(72) Inventors:
• **Sprague, Michael
London, W11 3AP (GB)**
• **Jalalirad, Amir
5611 AZ Eindhoven (NL)**
• **Scavuzzo, Marco
5692 VE Son en Breugel (NL)**

• **Capota, Catalin
Palatine, Illinois 60067 (US)**

(74) Representative: **Potter Clarkson
Chapel Quarter
Chapel Bar
Nottingham NG1 6HQ (GB)**

(56) References cited:
**US-A1- 2018 240 011**

• **JIHONG PARK ET AL: "Wireless Network
Intelligence at the Edge", ARXIV.ORG, CORNELL
UNIVERSITY LIBRARY, 201 OLIN LIBRARY
CORNELL UNIVERSITY ITHACA, NY 14853, 7
December 2018 (2018-12-07), XP081493013,**
• **CONG XIE ET AL: "Asynchronous Federated
Optimization", ARXIV.ORG, CORNELL
UNIVERSITY LIBRARY, 201 OLIN LIBRARY
CORNELL UNIVERSITY ITHACA, NY 14853, 10
March 2019 (2019-03-10), XP081131620,**

## Description

## FIELD

The following disclosure relates to location, navigation, and/or mapping services.

## BACKGROUND

Many technologies involve massive amounts of data collection and collaborative intelligence that processes and analyzes the data. Internet of things (IoT), autonomous driving, or image recognition technologies are examples where data from remote sensors is continuously collected, communicated, and processed to make inferences about the state of a system, or predictions about future states. The data includes everything from user habits to images to audio and more. Analysis of the data could improve learning models and user experiences. For example, language models can improve speech recognition and text entry, and image models can help automatically identify photos.

The complex problem of training these models could be solved by large scale distributed computing by taking advantage of the resource storage, computing power, cycles, content, and bandwidth of participating devices available at edges of a network. In such a distributed machine learning scenario, the dataset is transmitted to or stored among multiple edge devices. The devices solve a distributed optimization problem to collectively learn the underlying model. For distributed computing, similar (or identical) datasets may be allocated to multiple devices that are then able to solve a problem in parallel.

However, privacy and connectivity concerns may prohibit data from being shared between devices preventing largescale distributed methods. Users may prefer to not share voice, video, or images with other devices or unknown users. Devices may not be simultaneously or continuously connected and may contain disparate data sets. Bandwidth concerns may prohibit timely sharing of data.

US 2018/240011 discloses techniques for training a central/global machine learning model in a distributed machine learning system. In the data sampling techniques, a subset of the data obtained at the local sites is intelligently selected for transfer to the central site for use in training the central machine learning model. In the model merging techniques, distributed local training occurs in each local site and copies of the local machine learning models are sent to the central site for aggregation of learning by merging of the models. The central machine learning model is trained based on various representations/transformations of data seen at the local machine learning models, including sampled selections of data-label pairs, intermediate representation of training errors, or synthetic data-label pairs generated by models trained at various local sites.

JIHONG PARK ET AL: "Wireless Network Intelligence at the Edge", ARXIV.ORG, CORNELL UNIVERSITY LIBRARY, 201 OLIN LIBRARY CORNELL UNIVERSITY ITHACA, NY 14853, 7 December 2018 (2018-12-07), XP081493013 discusses building blocks of edge ML, different neural network architectural splits and their inherent tradeoffs. It discusses the applications demonstrating the effectiveness of edge ML in unlocking the full potential of 5G.

CONG XIE ET AL: "Asynchronous Federated Optimization",ARXIV.ORG, CORNELL UNIVERSITY LIBRARY, 201 OLIN LIBRARY CORNELL UNIVERSITY ITHACA, NY 14853, 10 March 2019 (2019-03-10), XP081131620, deals with federated learning and identifies the problem that too many devices checking in at the same time can congest the network on the server side. Thus, in each global epoch, the server is limited to selecting only from the subset of available devices to trigger the training tasks.

## SUMMARY

The invention is defined by the independent claims. Dependent claims define preferred embodiments.

In an embodiment, a device is provided for training a model. The device includes at least one sensor, a communications interface, and a device processor. The at least one sensor is configured to acquire a plurality of data instances. The communication interface is configured to communicate with a parameter server. The device processor is configured to train the model using a threshold quantity of the data instances of the plurality of data instances. The device processor is configured to over sample or under sample the plurality of data instances to equal the threshold quantity. The device processor is further configured to transmit a parameter vector of the trained model to the parameter server and receive in response, an updated central parameter vector from the parameter server derived from the model; the device processor further configured to retrain the model using the updated central parameter vector. The at least one sensor acquires different data instances than other sensors of the other devices that are training respective models.

In an embodiment, a method is provided for training a model using a plurality of distributed worker devices. A worker device identifies a plurality of data instances and selects a first set of data instances from the plurality of data instances as a function of a threshold quantity received from a parameter server. The worker device trains the model using the first set of data instances and a set of first parameters and transmits a set of second parameters of the trained model to the parameter server. The worker device receives a set of third parameters from the parameter server and an updated threshold quantity. The set of third parameters is calculated at least partially as a function of the set of second parameters. The worker device selects a second set of data instances from the plurality of data instances as a function of the updated threshold quantity received from a parameter server and trains the model using the second set of data instances and the set of third parameters.

In an embodiment, a system is provided for training a model using a plurality of distributed worker devices. A worker device identifies a plurality of data instances and selects a first set of data instances from the plurality of data instances as a function of a threshold value received from a parameter server. The worker device trains the model using the first set of data instances and a set of first parameters and transmits a set of second parameters of the trained model to the parameter server. The worker device receives a set of third parameters from the parameter server. The set of third parameters is calculated at least partially as a function of the set of second parameter. The worker device selects a second set of data instances from the plurality of data instances as a function of the threshold value and trains the model using the second set of data instances and the set of third parameters.

## BRIEF DESCRIPTION OF THE DRAWINGS

Exemplary embodiments of the present invention are described herein with reference to the following figures.

Figure 1 depicts an example system for edge learning according to an embodiment.
Figure 2 depicts an example system for edge learning according to an embodiment.
Figure 3 depicts a workflow for edge learning according to an embodiment.
Figure 4 depicts an example device for edge learning according to an embodiment.
Figure 5 depicts an example system for edge learning according to an embodiment.
Figure 6 depicts an example system for edge learning according to an embodiment.
Figure 7 depicts an example device of the system of Figure 1 according to an embodiment.
Figure 8 depicts an example map of a geographic region.
Figure 9 depicts an example data structure of a geographic database.

## DETAILED DESCRIPTION

Embodiments described herein provide systems and methods to optimize cooperation between devices which are communally solving a problem. Each device possesses its own local and possibly temporally limited data that prevents each device from learning a model that is sufficiently general. To preserve privacy, or because of bandwidth limitations, the devices do not/cannot share their data with any central or peer entities. The devices update each other by communicating the parameters extracted from the local data. The update rate of the devices is decoupled from the size of the data that is available to the device. Therefore, no single worker dominates the general model learning process.

Training of models, e.g. machine learned networks, neural networks, algorithms, requires a large amount of data. However, gathering and labeling this data may be prohibitive and expensive. Privacy concerns and bandwidth issues may not allow for gathering of such a large amount of data in a centralized location.

As described here within, machine learning provides a technique for devices to learn to iteratively identify a solution not known a priori or without being programmed explicitly to identify the solution. Machine learning uses two types of techniques: supervised learning, which trains a model on known input and output data so that the model may predict future outputs, and unsupervised learning, which finds hidden patterns or intrinsic structures in input data. Both techniques require large amounts of data to "learn" to generate an accurate output.

Supervised machine learning teaches a model using a large known (labeled) set of data. The training method takes the labeled set and trains a model to generate predictions for a response to new data. The model, in other words, is taught to recognize patterns (sometimes complex) in labeled data and then applies the patterns to new data. Different techniques may be used for supervised learning including, for example, classification, regression, and/or adversarial techniques.

Classification techniques predict discrete responses, for example, whether an email is genuine or spam, whether an image depicts a cat or dog, whether a tumor is cancerous or benign. Classification models classify input data into categories. Some applications of classification include object identification, medical imaging, speech recognition, and credit scoring. Classification techniques may be used on data that can be tagged, categorized, or separated into specific groups or classes. For example, applications for hand-writing recognition and image recognition use classification to recognize letters and numbers. Classification techniques may use optimization methods such as gradient descent. Other optimization techniques may also be used. Common algorithms for performing classification include support vector machine (SVM), boosted and bagged decision trees, k-nearest neighbor, Naive Bayes, linear discriminant analysis, logistic regression, and neural networks.

Regression techniques predict continuous responses, for example, changes in temperature or estimates for sales growth. Some applications of regression techniques include electricity load forecasting and algorithmic trading. Regression techniques may also use optimization methods such as gradient descent or other optimization methods. Common regression algorithms include linear model, nonlinear model, regularization, stepwise regression, boosted and bagged decision trees, neural networks, and adaptive neuro-fuzzy learning.

Adversarial techniques make use of two networks. One network is used to generate an output from a first set of data. The second network operates as a judge to identify if the output data is real or a forgery. Both networks are adjusted during the training process until the first network can generate outputs that, for example, indistinguishable from the real data. Alternative techniques may also be used to train a model.

Classification, regression, and adversarial techniques may be used to solve problems relating to navigation services. In an example of using classification for machine learning training, a method of object identification on the roadway involves capturing images as vehicles drive around. The images may be annotated to identify objects such as road markings, traffic signs, other vehicles, and pedestrians for example. The annotations / labels may be provided by a user or inferred by a user action (e.g. stopping at a stop light). Annotations / labels may also be derived from other sensor data (e.g. LIDAR sensor data used to label image data). The images are input into a large centralized neural network that is trained until the neural network reliably recognizes the relevant elements of the images and is able to accurately classify the objects. A large, disparate set of data is needed to train the neural network. The process of collecting the large data set of labeled objects may run into privacy, bandwidth, and timing issues.

Another issue that confounds large scale collection of data is that the devices that collect the data may have a diverse range of computational power and/or large variance in the number of data points per device. If a communication to the server happens asynchronously (e.g. without imposing an order or fixed request and response cycle on the communication loops), some of the devices may communicate with the server rapidly and dominate the aggregation of parameters extensively. For example, if the devices send their updated parameters as soon as the devices process one or more sets of the local data, the rate at which a worker machine communicates with the central server is proportional to the size of the local data the device has available. As a result, when the distribution of the data on the different devices is unbalanced, the training requires more rounds of communication than the synchronous training of the model to reach the equivalent level of accuracy.

In another example, some slow devices may send stale updates to the server. This may have a disruptive effect on training the global model. If the devices communicate with the server in a synchronous manner (the server sends aggregated parameters to a number of devices and waits for them to take a certain number of training steps and update), slow devices may slow down the update procedure. Furthermore, a single device may halt the update process and render this scheme impractical.

In an embodiment, a model may be trained using data from multiple worker devices without sharing data or complicated transmission and timing schemes. Each worker device collects data using a sensor on or about a vehicle. The data may be image data, video data, audio data, text data, personal data, weather data or other types of data. In an example of image data collection and object identification, certain objects in the images are labeled based on an existing model, manual annotation, or validation methods. For example, an object in an image may be labeled as a particular sign as the sign exists at the specified location in a high definition (HD) map database.

Using the labeled objects, each worker device may train a locally stored model using a classification technique. Parameters for the locally trained model are transmitted by each of the worker devices to a parameter server. The transmission are quasi-synchronous. For example, each worker device may transmit local parameters after training a copy of a local model on a number of data instances. To maintain a relative balance for the transmission to the parameter server the devices may be throttled by over or sub-sampling the local data. Throttling of the transmission may be used when there is diverse range of computational power and/or large variance in the number of data points per device. In either scenario, the throttling prevents particular devices from dominating the global trained model.

In a first scenario, where the worker devices have similar processing power but different number of data points, a threshold ($\tau$) is set to the number of data points that should be processed by the worker device before it can send a parameter vector to the server. The threshold may be determined based on the operating characteristics of the workers (e.g. processing speed or power) or, for example, the quantity or quality of data stored at the worker. The threshold may be set just once, prior to the start of the training procedure in the workers. The workers meet the constraint by over/sub-sampling: when the number of instances available to the worker is larger than the threshold ($m > \tau$), the worker samples $\tau$ instances out of its data and performs training using just those instances. When the number of data points available to the worker is smaller than the threshold ($m < \tau$), the worker samples $\beta$ instances out of its data and then repeatedly reads all data instances $\alpha$ times so that: $\beta + \alpha * m = \tau$. In this way, all workers process the same number of data instances before sending an update to the server and, because their processing power is the same, the workers have similar update rates when sending parameters to the parameter server. Therefore, no single worker dominates the dynamics of the aggregation in the server.

In a second scenario, where the worker devices include a diverse range of processing power and different number of data instances, the parameter server sets the threshold ($\tau$) dynamically at each communication with the worker. Each time the server receives an update from a worker, it counts the number of updates it received from that worker considering the last w updates. If the count is one (c=1), the threshold for that worker does not change. If the count is more than one ($c > 1$), then the threshold for that worker is increase by $\alpha * c$. The worker meets the new threshold through over/sub-sampling procedure explained above. The values of the hyper-parameters $w$ and $\alpha$ may be set initially but may also be adjusted as the training process proceeds.

In either scenario, since the worker devices are capturing different data, each worker device may reach the threshold at different times. A first device finishes training and transmits the parameters to the parameter server. The parameter server updates a central set of parameters and transmits the updated central set of parameters back to the worker device. This process is repeated when each worker device asynchronously (e.g. by each device separately and independently) transmits the respective locally generated parameters. Due to the threshold the worker may transmit local parameters at similar if not the same rate. During the processes, the parameter server is constantly updating the central set of parameters and transmitting the updated set to the worker that transmitted the local parameters. As workers collect new data, the local models may be trained on the new data or a combination of the new and old data. Over time, the transmitted parameters back and forth between the workers and the parameter server eventually settles on a final set of parameters. The final set of parameters and the model may then be used by the worker or other devices to accurately identify objects that the devices encounter on the roadway. Other types of models may be trained using the distributed network of devices.

In an embodiment, systems and methods are provided for training a model (also referred to as machine learning model, neural network, or network) using a gradient descent process on a large number of devices with each device holding a respective piece of training data without sharing data sets. Training using an optimization method such as gradient descent includes determining how close the model estimates the target function. The determination may be calculated a number of different ways that may be specific to the particular model being trained. The cost function involves evaluating the parameters in the model by calculating a prediction for the model for each training instance in the dataset and comparing the predictions to the actual output values and calculating an average error value (such as a value of squared residuals or SSR in the case of linear regression). In a simple example of linear regression, a line is fit to a set of points. An error function (also called a cost function) is defined that measures how good (accurate) a given line is. In an example, the function inputs the points and return an error value based on how well the line fits the data. To compute the error for a given line, in this example, each point $(x, y)$ is iterated in the data set and the sum the square distances between each point's y value and the candidate line's y value is calculated as the error function.

Gradient descent is used to minimize the error functions. Given a function defined by a set of parameters, gradient descent starts with an initial set of parameter values and iteratively moves toward a set of parameter values that minimize the function. The iterative minimization is based on a function that takes steps in the negative direction of the function gradient. A search for minimizing parameters starts at any point and allows the gradient descent algorithm to proceed downhill on the error function towards a best outcome. Each iteration updates the parameters that yield a slightly different error than the previous iteration. A learning rate variable is defined that controls how large of a step that is taken downhill during each iteration.

For image processing and computer vision models, unsupervised learning techniques may also be used for object detection and image segmentation. Unsupervised learning identifies hidden patterns or intrinsic structures in the data. Unsupervised learning is used to draw inferences from the datasets that include input data without labeled responses. One example of unsupervised learning technique is clustering. Clustering may be used to identify patterns or groupings in data. Applications for cluster analysis may include, for example, gene sequence analysis, market research, and object recognition. Common algorithms for performing clustering include k-means and k-medoids, hierarchical clustering, Gaussian mixture models, hidden Markov models, self-organizing maps, fuzzy c-means clustering, and subtractive clustering. In an embodiment, systems and methods are provided for training a model on a large number of devices with each device holding its own piece of training data without sharing data sets.

Unsupervised learning algorithms lack individual target variables and instead have the goal of characterizing a data set in general. Unsupervised machine learning algorithms are often used to group (cluster) data sets, e.g., to identify relationships between individual data points (that may include of any number of attributes) and group them into clusters. In certain cases, the output from unsupervised machine learning algorithms may be used as an input for supervised methods. Examples of unsupervised learning include image recognition, forming groups of data based on demographic data, or clustering time series to group millions of time series from sensors into groups that were previously not obvious.

One problem with training a network with machine learning is procuring a data set on which to train the network. The output of the network may not be accurate if the data on which the network is trained on is flawed or limited in scope. Collecting a large amount of disparate data may be curtailed by privacy and transmission concerns. In the example of object recognition on a roadway, users may be hesitant to provide personal and local data in mass. Further, raw image data may be massive and as such difficult to share across a network. Once collected, the data must be processed, required both time and resources.

One solution is to process the data at the devices that collect the data. In order to facilitate the processing, different methods may be used. One method shares data across devices. Data may be transmitted to a central repository. The data or a model may be transmitted back to the edge devices. This method still includes privacy and transmission issues. Additionally, the data may be evenly distributed to accelerate the training. For example, by allocating the same amount or types of data to each device, the devices may finish processing the data at or about the same time allowing a centralized server to capture the results at the same time. A centralized server may balance data between devices. Another solution includes waiting for a certain fraction of devices to return before aggregating the learning parameters. Then all the workers are updated based on the aggregated parameters from a subset of nodes. One problem with this solution is that it may depend on having viable bandwidth. The number of devices is also required to specified ahead of time and the loss or delay of one device may interrupt the learning process. For example, if one or more devices are delayed, the entire process may also have to wait. Each of these methods has drawbacks as described above. Privacy issues may prohibit transfer of data. Transmission bottlenecks may prohibit or slow transmission to a central repository.

Another issue is that the devices may have a diverse range of computational power and/or large variance in the number of data points per device. If the communication to the server happens asynchronously (meaning without imposing an order or fixed request and response cycle on the communication loops), some of the devices communicate with the server rapidly and dominate the aggregation of parameters extensively. Also, some slow devices send stale updates to the server which has a disruptive effect on the parameter aggregation. If the devices communicate with the server in a synchronous manner (the server sends aggregated parameters to a number of devices and waits for them to take a certain number of training steps and update), slow devices slow down the update procedure. Furthermore, a single device may halt the update process and render this scheme impractical.

Embodiments provide for distributed processing of data while maintaining privacy and transmission concerns. In an embodiment, all the data remains on the edge devices to satisfy privacy concerns. No data is available centrally to train the model. The ratio of data points to devices may be relatively small resulting in the data on each device being non-independently and identically distributed data (non-I.I.D.) (devices have only a subset of data types) and unbalanced (devices have different orders of magnitude of data). The training occurs in a decentralized manner on multiple devices with only the local data available to each device. The multiple devices do not share data. The aggregation of model parameters occurs asynchronously on a centralized parameter server. The aggregation of the model parameters includes a small linear weighting of the locally-trained model parameters to the centrally-stored model parameters that is independent of the number of data points, the staleness of the parameter updates, and the data distribution (e.g. unbalanced non-I.I.D.). The transmissions are quasi-balanced by using a threshold that dictates when a device should over or sub sample the local data set prior to transmitting a parameter so that one device does not overwhelm the global model with its transmissions. The result is a quasi-synchronous edge learning system or an adaptive asynchronous edge learning system that provides for asynchronous edge learning but with the benefits that come with a synchronous transmission scheme.

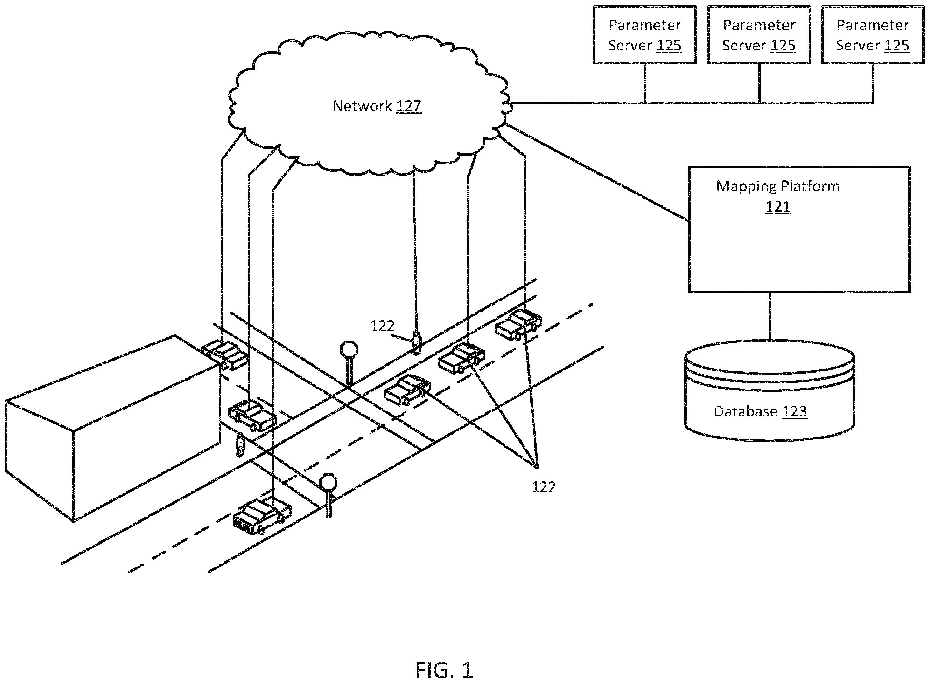

Figure 1 depicts a decentralized system for training a model. The system includes a plurality of devices 122, a network 127, parameter servers 125, and a mapping platform 121. The mapping platform 121 may include or may be connected to a database 123 (also referred to as a geographic database or map database or HD mapping database or HD map). The mapping platform 121 may include the one or more servers 125. Additional, different, or fewer components may be included.

The system includes devices 122 (also referred to as edge devices or worker devices 122). The devices may include probe devices, probe sensors, or other devices 122 such as personal navigation devices 122, location aware devices, smart phones mounted on a vehicle, or connected vehicles among other devices. The devices 122 communicate with one another using the network 127. Each device 122 may execute software configured to train a model. Each device 122 may collect and/or store data relating to the model. The data for each device 122 is not independently and identically distributed (non-I.I.D.). The distribution of data on two given devices might be quite different. The data for each device 122 is also unbalanced. The amount of data on two given devices includes different magnitudes of data instances (data points). The devices 122 may include different processing capabilities. For example, certain devices 122 may be configured to process data quicker or slower either as a result of physical specifications or user preferences.

The plurality of devices 122 may include probe devices, probe sensors, or other devices 122 such as personal navigation devices 122 or connected vehicles. The device 122 may be a navigation system built into the vehicle and configured to monitor the status of the vehicle. The devices 122 may include mobile phones running specialized applications that collect data as the devices 122 are carried by persons or things traveling the roadway system. The devices 122 may be configured to collect and transmit data including the status of a vehicle. The devices 122 may be configured to monitor conditions near the vehicle. The devices 122 may be configured to provide guidance for a user or vehicle.

The devices 122 may use different sensors such as cameras, light detection and ranging (LIDAR), radar, ultrasonic, or other sensors. Different types of data may be collected by a device 122, for example, image data, weather data, vehicular data, audio data, personal data, among others. For example, image data relating to roadways may be collected that represents features such as road lanes, road edges, shoulders, dividers, traffic signals, signage, paint markings, poles, and all other critical data needed for the safe navigation of roadways and intersections.

Each of the devices 122 may store a copy of a portion of a geographic database 123 or a full geographic database 123. The geographic database 123 may include data for HD mapping. An HD map or HD map data may be provided to the devices 122 as a cloud-based service. The HD map may include one or more layers. Each layer may offer an additional level of detail for accurate and relevant support to connected and autonomous vehicles. The layers may include, for example, a road model, a lane model, and a localization model. The road model provides global coverage for vehicles to identify local insights beyond the range of the vehicle's onboard sensors such as high-occupancy vehicle lanes, or country-specific road classification. The lane model may provide more precise, lane-level detail such as lane direction of travel, lane type, lane boundary, and lane marking types, to help self-driving vehicles make safer and more comfortable driving decisions. The localization layer provides support for the vehicle to localize the vehicle in the world by using roadside objects like guard rails, walls, signs and pole like objects. The vehicle identifies an object, then uses the object's location to measure backwards and calculate exactly where the vehicle is located.

Each of the device 122 may store a model (e.g. machine-learned network) that is trained by a large number (hundreds, thousands, millions, etc.) of devices 122 with each device 122 holding a set of training data without sharing data sets. Each device 122 may be configured to training a pre-agreed model with gradient descent learning for a respective piece of training data, only sharing learnt parameters of the model with the rest of the network. The device 122 is configured to acquire different training data than other devices that are training the model. In addition, at least one transmission between the device and a parameter server may occur asynchronously with respect to the other devices that are training the model. The devices 122 are configured to over or under sample acquired data. When over sampling the data, the devices 122 may reuse the data. When under sampling, the devices 122 may only use a portion of the data. The update rate of the devices 122 to the parameter server 125 is decoupled from the size of the data that is available to the device 122. In one embodiment, the number of data points that each device 122 needs to process before sending an update to the parameter server 125 is specified when the training process starts, independent of the number of data points available to the device 122. A device 122 that has fewer data points than specified process its existing data repeatedly until the specified threshold is met. Analogously, a device 122 that has more data points than specified send an update to the server as soon as the specified number of data points are processed. In an alternative embodiment, the number of data points that each device 122 needs to process before sending an update to the parameter server 125 is updated after each transmission. In this way, stronger devices 122 (more computational power or more data) are prevented from dominating the transmissions to the parameter server 125.

The devices 122 may include an HD map that is used to navigate or provide navigational services. The devices 122 may also include sensors that capture, for example, image data of features or object on the roadway. As a device 122 traverses a roadway, the device 122 may encounter multiple objects such as other vehicles, cyclists, pedestrians, etc. The device 122 may use the stored model to identify a position of the vehicle, or the identity of the objects. Based on the identification, the device 122 may provide navigation instructions or may provide commands for a vehicle to perform an action.

One or more devices 122 or the mapping platform 121 may be configured as a parameter server 125. The parameter server 125 may also be configured distinct from the devices 122 or mapping platform 121. The system may include one or more parameter servers 125. The parameter servers 125 are configured to receive locally trained model parameters from a device 122, adjust centrally stored model parameters, and transmit the adjusted centrally model parameters back to the device. The parameter server 125 is also configured to regulate the frequency / number of transmissions from the devices 122 by setting a threshold number of data points for the devices 122 to process prior to sending an update. The threshold may be set at the start of the process and / or may updated as the training process proceeds. The parameter server 125 communicates with each device 122 of the plurality of devices 122 that are assigned to the parameter server 125. The parameter servers 125 may be configured to aggregate parameters from one or more models that are trained on the devices 122. The parameter servers 125 may be configured to communicate with devices that are located in a same or similar region as the parameter server 125. One or more parameter servers 125 may communicate with one another. The parameter server 125 is configured to communicate asynchronously with the plurality of devices 122. When a device 122 transmits a set of locally trained model parameters, the parameter server 125 adjusts the central model parameters and transmits the adjusted centrally model parameters back to that device. If, for example, two different devices transmit locally trained model parameters, the parameter server performs the adjustment twice, e.g. a first time for the first device that transmitted locally trained model parameters and then a second time for the second device. The parameter server does not wait to batch results or average incoming trained model parameters. Communications between the devices 122 and the parameter server are one to one and serial, not depending on other communication with other devices. Asynchronous communication is the exchange of messages between the device and the parameter server responding as schedules permit rather than according to a clock or an event. Communications between each device 122 and parameter server may occur intermittently rather than in a steady stream.

In an embodiment, one or more parameter servers 125 may be configured as a master parameter server. The master parameter server may be configured to communicate with a plurality of parameter servers; the master parameter server configured to receive central parameters from the plurality of parameter servers; the master parameter server configured to calculate and transmit, in response to a communication from the parameter servers of the plurality of parameter servers, a set of global central parameters to a respective parameter server from which the communication originated. In an embodiment, the master parameter server is configured to communicate with both the plurality of parameter servers and the plurality of worker devices.

The parameter server 125 stores a central parameter vector that the parameter server 125 updates each time a device (worker unit) sends a parameter vector to the parameter server 125. A parameter vector may be a collection (e.g. set) of parameters from the model or a representation of the set of parameters. The parameter vector may be a randomly chosen components of a parameter vector. Models may include thousands or millions of parameters. Compressing the set of parameters into a parameter vector may be more efficient for bandwidth and timing than transmitting and recalculating each parameter of the set of parameters. A parameter vector may also be further compressed. In an embodiment, an incoming parameter vector I may also be compressed into a sparse subspace vector. For example, if I = (i_1, i_2,i_3 ,...,i_n), the incoming parameter vector I may be compressed into I'=(i_b1, i_b2, ...,i_bm) prior to transmission where m is smaller than n. After receiving I', at the parameter server, I" may be uncompressed into I" = (0, 0, ., i_b1, 0,..., 0, i_b2,..., i_bm,0,...) which is then used as the incoming parameter vector I in Equation 1 described below.

In an embodiment, the update is done using the following equation:

$$\text{EQUATION 1: } N = (1\text{-}\alpha) * O + \alpha * I$$

where N = the new central parameter vector;
O = the old (current) central parameter vector;
I = the incoming parameter vector;
Alpha ($\alpha$) = a fixed real number between 0 and 1;
* denotes the scalar multiplication; and
+ denotes vector addition.

The value of alpha may be adjusted automatically or manually depending on the type of training, the expected number of iterations, and the number of devices. The value of alpha may be changed dynamically during the training process. A lower alpha value discounts the newer incoming parameter, leading to less change in the central parameter vector. A higher alpha value allows for the incoming parameters vectors to quickly change the central parameter vector. The value of alpha may be calculated or set manually or automatically. The update may also use different functions to calculate the new central parameter vector. The new central parameter vector may be calculating using, for example, linear interpolation.

In an embodiment, the parameter server 125 further communicates with other parameter servers 125. A master parameter server, for example, may aggregate model parameters from multiple first level parameter servers. The system may be configured with multiple levels of aggregation. Similar to receiving locally trained model parameters, each parameter server transmits trained model parameters to the master parameter server and received back master trained model parameters.

In an embodiment, the devices 122 further provide navigation services to an end user or generate commands for vehicular operation. The devices 122 may communicate with the mapping platform 121 through the network 127. The devices 122 may use trained models (using received parameters) to provide data to assist in identifying a location of the device 122, objects in the vicinity of the device 122, or environmental conditions around the device for example.

To provide navigation services, the devices 122 may further receive data from the mapping platform 121. The mapping platform 121 may also receive data from one or more systems or services that may be used to identify the location of a vehicle, roadway features, or roadway conditions. The device 122 may be configured to acquire and transmit map content data on the roadway network to the mapping platform 121. As depicted in Figure 1, the device 122 may be configured to acquire sensor data of a roadway feature and the location of the roadway feature (approximation using positional circuitry or image processing). The device 122 may be configured to identify objects or features in the sensor data using one or more machine leant models. The device 122 may be configured to identify the device's location using one or more models. The one or more models may be trained on multiple distributed devices on locally stored data that is not shared between the devices. The identified objects or features may be transmitted to the mapping platform 121 for storage in a geographic database 123. The geographic database 123 may be used to provide navigation services to the plurality of devices 122 and other users.

The mapping platform 121, parameter server 125, and devices 122 are connected to the network 127. The devices 122 may receive or transmit data through the network 127 to the other devices 122 or the mapping platform 121. The mapping platform 121 may receive or transmit data through the network 127. The mapping platform 121 may also transmit paths, routes, or feature data through the network 127. The network 127 may include wired networks, wireless networks, or combinations thereof. The wireless network may be a cellular telephone network, LTE (Long-Term Evolution), 4G LTE, a wireless local area network, such as an 802.11, 802.16, 802.20, WiMax (Worldwide Interoperability for Microwave Access) network, DSRC (otherwise known as WAVE, ITS-G5, or 802.11p and future generations thereof), a 5G wireless network, or wireless short-range network. Further, the network 127 may be a public network, such as the Internet, a private network, such as an intranet, or combinations thereof, and may utilize a variety of networking protocols now available or later developed including, but not limited to transmission control protocol/internet protocol (TCP/IP) based networking protocols.

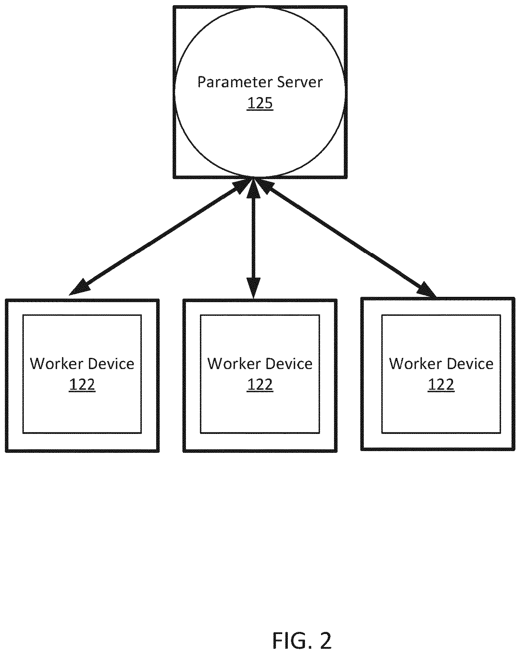

Figure 2 depicts an example of a system for training a model using a plurality of devices. Figure 2 include three devices that are configured as worker devices 122 and one device that is configured as a parameter server 125. Each of the three worker devices 122 include at least one sensor configured to acquire and store training data including one or more data instances. The three worker devices 122 communicate with the parameter server 125 using a communication interface. The parameter server 125 aggregates the parameter vectors from each of the three devices and generates a central parameter vector. In an embodiment, the aggregation is done using equation 1 described above. During operation, the three worker devices 122 may each include a device processor configured to train a model using the training data. The device processor is further configured to transmit a parameter vector of the trained model to a parameter server 125. The device processor is further configured to receive an updated central parameter vector from the parameter server 125; the device processor further configured to retrain the model using the new central parameter vector. In an embodiment, each of the worker devices 122 include different levels of computational power. The worker devices 122 may include different physical specifications or may be limited or boosted as a result of user or application settings. As used herein, different levels of computational power may refer to devices that process data at different rates. The levels or difference may include a 5%, 10%, 50%, 100% or more difference in processing rate. Devices 122 or workers may be assigned a category of processing power. For example, a device 122 may be assigned to a low computational power category while another may be assigned to a high computational power category. Devices 122 may include a setting that limits the amount of computational resources for the training processes. For example, a device 122 may allocate no more than 10% of its computational power to the training process. This device 122 may be assigned a lower category than a device that allocates more resources. In an embodiment, the category or processing rate of each of the devices 122 in the system may be calculated or assigned as the devices 122 process the training data. A device 122 may initially be categorized as a high computational device 122 but then as the training process proceeds, the device 122 may allocate fewer resources and as such provide fewer computational resources. Similar categories or designations may be applied for the amount of data that a device 122 has access to. For example, each of the worker devices 122 may acquire data at different rates. Each of the three devices of Figure 2 may acquire and store different training data than the other devices. The variations in computational power and size of data may affect the update rate of the devices 122. A threshold value is provided that helps regulate the update process so that devices with different computational power or different data size do not dominate the process. In addition, each of the devices 122 communicates with the parameter server 125 asynchronously.

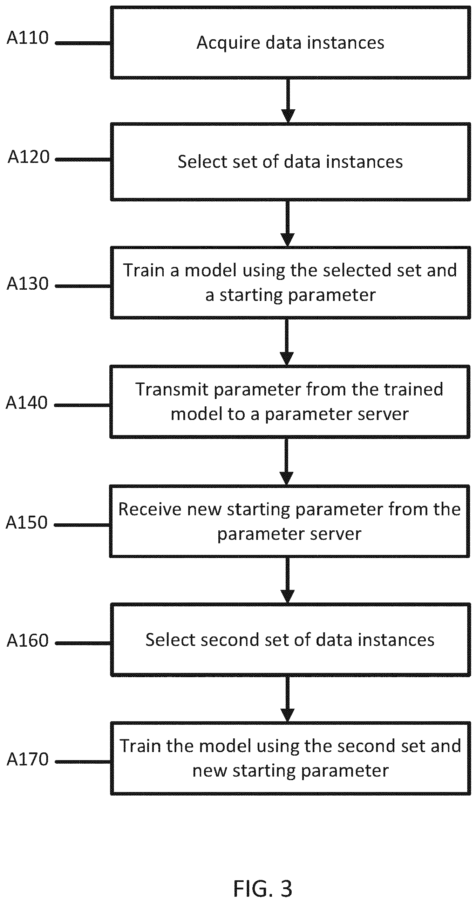

Figure 3 depicts an example workflow for training a model using a plurality of distributed worker devices 122 such as depicted in Figure 2. As presented in the following sections, the acts may be performed using any combination of the components indicated in Figure 1, Figure 2, or Figure 7. The following acts may be performed by the device 122, the parameter server 125, the mapping system 121, or a combination thereof. Additional, different, or fewer acts may be provided. The acts are performed in the order shown or other orders. The acts may also be repeated. Certain acts may be skipped.

By using a plurality of distributed worker devices 122, the model is trained on a much larger volume of data on the edge than can be transferred to a centralized server for bandwidth, privacy, business, and timing reasons. The data, including any personal information, remains on the worker devices 122 and only the model parameters that encode low- and high-level concepts are shared centrally through a parameter server 125. Since the data stays on the worker devices 122, a reduced amount of data is needed to be transferred (e.g. image data/audio). Additionally, the model may be trained using a diverse set of data as certain data may not be easily transferred from the devices (for example, automotive sensor data). Finally, as the training occurs on the worker devices 122 maintained by third-parties, the cost to run the large models over huge datasets is at least partially borne by the users participating in the training process.

At act A110, a worker device 122 acquires data instances. The data instances may be data acquired from, for example, a sensor in communication with the worker device 122 (camera, LIDAR, microphone, keypad, etc.). The data instances may be provided to the worker device 122 by another device or sensor. The data instances may be used as training data for training a model. The training data on each of the devices is not independently and identically distributed (non-I.I.D.). The distribution of data on two given devices may be different and unbalanced (devices have different orders of magnitudes of training data points). In an example, for image data, one device may have several gigabytes of image data that relates to images taken while traversing a highway and another device may only have a few megabytes of image data acquired while traversing a rural road. Both sets of data may be useful to train an image recognition model even though the sets of data include images from two disparate areas and have magnitudes of difference in quantity. The quality of data may also differ between devices. Certain devices may include higher quality sensors or may include more storage for data allowing higher quality data to be captured.

At act A120, the worker device 122 selects a first set of data instances from the acquired data instances as a function of a threshold value received from a parameter server. There are two different scenarios for selection of the data instances. In case the number of instances available to the worker device 122 is larger than the threshold ($m > \tau$), the worker device 122 samples $\tau$ instances out of its data and performs training using just these instances. In case the number of data points available to the worker is smaller than the threshold ($m < \tau$), the worker device 122 samples $\beta$ instances out of the data and then repeatedly reads all data instances $\alpha$ times so that: $\beta + \alpha * m = \tau$. This way, all worker devices 122 process the same number of data instances before sending an update to the parameter server 125 and, because their processing power is the same, the worker devices 122 include similar update rates when sending parameters to the parameter server 125. Therefore, no single worker device 122 dominates the dynamics of the aggregation in the parameter server 125. In an embodiment, the threshold value may be updated by the parameter server for the case where the worker devices 122 include a diverse range of processing power and different number of data instances. In this case, the parameter server sets the threshold ($\tau$) dynamically at each communication with the worker. Each time the parameter server receives an update from a worker device 122, the parameter server counts the number of updates it received from that worker considering the last w updates. If the count is one (c=1), the threshold for that worker does not change. If the count is more than one (c > 1), then the threshold for that worker is increase by $\alpha * c$. The worker meets the new threshold through over/sub-sampling procedure described above. The values of the hyper-parameters w and $\alpha$ are set initially.

At act A130, the worker device 122 trains a model using the first set of data instances and a first parameter. The worker device 122 includes a model and local training data. In an embodiment, the training data is labeled. Labeled data is used for supervised learning. The model is trained by imputing known inputs and known outputs. Weights or parameters are adjusted until the model accurately matching the known inputs and output. In an example, to train a model to identify traffic signs using acquired image data, images of traffic signs - with a variety of configurations - are required as input variables. In this case, light conditions, angles, soiling, etc.

are compiled as noise or blurring in the data as the model needs to be able to recognize, for example, a traffic sign in rainy conditions with the same accuracy as when the sun is shining. The labels, the correct designations, for such data may be assigned manually or automatically. The correct set of input variables and the correct classifications constitute the training data set.

Labels may be provided by, for example, requesting additional input from a user (requesting a manual annotation), derived from additional data (parsing textual descriptions), or by incorporating additional data from other sensors. In an example, for a model that identifies location based from image data, the labels for the training set may be provided by a global positioning system (GPS) or positional sensor. The model may be used in situations where the GPS sensor is unreliable or in addition to the GPS sensor. In this scenario, for the training data, the GPS or positional sensor may be more accurate than locating by image recognition. Another example includes training an optical camera to recognize depth using LIDAR as the ground truth, so that the optical camera may recognize depth in cars without LIDAR.

Other methods for labeling data may be used, for example, a cloud-based service may give accurate, albeit incomplete, labels that be downloaded from the cloud to the edge. Delayed user interactions may also provide the label. For example, if a model is attempting to recognize whether a stop sign exists a certain intersection, then the behavior of the driver (whether the driver stops at the intersection) may be used to generate a label for the data.

In an embodiment, the training data is labeled, and the model is taught using a supervised learning process. A supervised learning process may be used to predict numerical values (regression) and for classification purposes (predicting the appropriate class). A supervised learning processing may include processing images, audio files, videos, numerical data, and text among other types of data. Classification examples include object recognition (traffic signs, objects in front of a vehicle, etc.), face recognition, credit risk assessment, voice recognition, and customer churn, among others. Regression examples include determining continuous numerical values on the basis of multiple (sometimes hundreds or thousands) input variables, such as a self-driving car calculating the car's ideal speed on the basis of road and ambient conditions.

The model may be any model that is trained using a machine learning process. The model may be trained using processes such as support vector machine (SVM), boosted and bagged decision trees, k-nearest neighbor, Naive Bayes, discriminant analysis, logistic regression, and neural networks. In an example, a two-stage convolutional neural network is used that includes max pooling layers. The two-stage convolutional neural network (CNN) uses rectified linear units for the non-linearity and a fully-connected layer at the end for image classification.

In an embodiment, the model may be trained using an adversarial training process, e.g. the model may include a generative adversarial network (GAN). For an adversarial training approach, a generative network and a discriminative network are provided for training by the devices. The generative network is trained to identify the features of data in one domain A and transform the data from domain A into data that is indistinguishable from data in domain B. In the training process, the discriminative network plays the role of a judge to score how likely the transformed data from domain A is similar to the data of domain B, e.g. if the data is a forgery or real data from domain B.

In an embodiment, the model is trained using a gradient descent technique or a stochastic gradient descent technique. Both techniques attempt to minimize an error function defined for the model. For training (minimizing the error function), a worker device 122 first connects to the parameter server 125. The worker device 122 may start with randomly initialized model parameters or may request initial model parameters from the parameter server 125. The starting parameters may also be derived from another, pretrained model rather than being randomly initialized. The initial parameters may be assigned to all subsequent edge nodes. Alternatively, updated central parameters may be assigned if the training process has already begun. In an example, worker devices 122 may initially communicate with the parameter server 125 at different times. A first device may communicate with the parameter server 125 and be assigned randomly initialized model parameters. Similarly, a second device may communicate shortly thereafter with the parameter server 125 and be assigned randomly initialized model parameters. At some point, devices may begin transmitting local parameters back to the parameter server 125. The parameter updates the central parameters and transmits the central parameters back to the respective device. Any device that first communicates with the parameter server 125 after this time may be assigned the central parameters and not the randomly initialized model parameters. In this way, new devices may be added to the system at any point during the training process without disrupting the training process. Handing out the latest parameters to newly joined edge nodes may result in faster learning at early stages.

The gradient descent technique attempts to minimize an error function for the model. Each device trains a local model using a set of local training data. The set of local training data may include a subset of data instances of the training data located on the device. Alternatively, the training data may sample the data instances multiple times. Whether or not the data instances are under or over sampled may be determined as a function of a threshold values provided by the parameter server 125. The parameter server 125 may update the threshold as the training proceeds. Training the model involves adjusting internal weights or parameters of the local model until the local model is able to accurately predict the correct outcome given a newly input data point. The result of the training process is a model that includes one or more local parameters that minimize the errors of the function given the local training data. The one or more local parameters may be represented as a parameter vector. As the local training data is limited the trained model may not be very accurate when predicting the result of an unidentified input data point. The trained model, however, may be trained to be more accurate given starting parameters that cover a wider swath of data. Better starting parameters may be acquired from the parameter server 125.

Referring back to Figure 3, at act A140, the worker device 122 transmits a second parameter from the trained model to the parameter server 125. The second parameter may be parameter vector that is generated as a result of training the model using the training data. In an embodiment, the worker device 122 may transmit a set of parameters from the model. A gradient, may for example, include thousands or millions of parameters. The set of parameters may be transmitted or compressed in to, for example, a parameter vector that is transmitted to the parameter server 125. In an embodiment, the second parameter set may be a randomly chosen subset of parameters or parameter vectors. The subset may also be, for example, the second parameter set encoded using a sparsely encoding scheme.

At act A150, the worker device 122 receives a third parameter from the parameter server 125. The worker device 122 may also receive an updated threshold value. In an embodiment, the parameter server 125 stores a central parameter vector that the parameter server 125 updates each time a worker unit sends it a local parameter or local parameter vector. The parameter server 125 using a weighting function and a weight (Alpha) so that newly received local parameter vectors do not overwhelm the central parameter vector. In an embodiment, the parameter server 125 updates the central parameter using equation 1 described above. The updated central parameter may be transmitted to the device prior to the updated central parameter being altered again by, for example, another device requesting a new central parameter. The updating of the central parameter set by one device may also be decoupled from that same device getting back an update. For example, the device may send an updated local parameter set, and then immediately get back the latest central parameters from the parameter server, without the central parameter set having been updated (yet) by the device's local parameters.

The Alpha value may be assigned or adjusted manually depending on the type of model, number of device, and amount of data. The Alpha value may be assigned initially and adjust over time or may be static for the entirety of the training process. One method for setting an initial Alpha value is to use a set of test device and benchmark databases. For example, two benchmark datasets that may be used to identify an Alpha value include the Modified National Institute of Standards and Technology database (MNIST) digit recognition dataset and the Canadian Institute for Advanced Research (CIFAR-10) dataset. Both datasets may be distributed with un-even distribution of data, both in terms of the data labels (restricted to several data labels per node, overlapping and non-overlapping) and the quantity of data (different orders of magnitude between nodes, with some less than the batch size). The test training process may be run on the test devices to identify an Alpha value that is correct for the training process given time, bandwidth, and data volume constraints. A test training process may also identify a quality of the model. One method for testing is to sample training data from devices (e.g. randomly select a training data point from a device before it is every used and then remove it from the training data set) and aggregate the samples centrally. Due to privacy concerns, the testing may only be implemented with user acknowledgement. Another method is to locally keep a training and testing data set, e.g. randomly chosen for each data point and, for local training, only local training data is used. After each local training session (certain number of epochs, or other suitably defined iterations) the local test result may be sent to a global test aggregation server that aggregates the test results.

In an embodiment, the Alpha value is set between .01 and .2 indicating that new incoming parameters are discounted between 80% and 99% when generating the new central parameter vector. Alternative values of Alpha may be used for different processes or models.

The updated threshold value may be used by the parameter server 125 to limit the influence of one or more worker devices 122 that include more data or possess more computational processing power than the other worker devices 122. In an embodiment, the threshold may be updated by the parameter server for the case where the workers have a diverse range of processing power and different number of data instances. In this case, the parameter server sets the threshold ($\tau$) dynamically at each communication with the worker. Each time the parameter server receives an update from a worker, the parameter server counts the number of updates it received from that worker considering the last w updates. If the count is one (c=1), the threshold for that worker does not change. If the count is more than one (c > 1), then the threshold for that worker is increase by $\alpha * c$. The worker meets the new threshold through over/sub-sampling procedure described above. The values of the hyper-parameters w and $\alpha$ are set initially but may be adjusted. The hyper-parameters w and $\alpha$ may be set depending on the variance of the computational power or number of expected data instances. Different models may be use different hyper-parameters. In certain models, the differences in data collection from different worker devices 122 may cause more issues than other models. For example, if one worker device 122 acquires and trains the model using a particular type of data while another worker device 122 acquires and trains the model using a different type of data, the hyper parameters may be set so that the update rate is near equal to prevent one type of data from overwhelming the model. In another scenario, if the data collected by each device is similar, the hyper parameters may be set so that the update rate does not have to be balanced.

At act A160, the worker device 122 selects another set of data instances to be used as training data. The quantity of the data instances in the local training data is regulated by either the original threshold value or if applicable, an updated threshold value received from the parameter server 125. In an embodiment, the threshold is set just once, prior to the start of the training procedure in the workers. The workers meet this constraint by means of over/sub-sampling: In case the number of instances available to the worker is larger than the threshold (m > $\tau$), the worker samples $\tau$ instances out of its data and performs training using just these instances. In case the number of data points available to the worker is smaller than the threshold (m < $\tau$), the worker samples $\beta$ instances out of its data and then repeatedly reads all data instances $\alpha$ times so that: $\beta + \alpha * m = \tau$. This way, all workers process the same number of data instances before sending an update to the server and, because their processing power is the same, the workers have similar update rates when sending parameters to the server. Therefore, no single worker dominates the dynamics of the aggregation in the server.

The worker device 122 may use the same local training data or may update the training data with newly collected sensor data. The training data may be weighted by age or may be cycled out by the device. For example, data older than a day, month, or year, may be retired and no longer used for training purposes. Data may also be removed or deleted by a user or automatically by the device. Additional data may be added to the training data set as the data is collected. In an embodiment, the worker device 122

At act A170, the worker device 122 retrains the model using the local training data and the third parameter. The model is trained similarly to the act A130. The difference for each iteration is a different starting point for one or more of the parameters in the model. The central parameter vector that is received may be different than the local parameter vector generated by the device in A130.

Additional acts may be performed. For example, the worker device 122 transmits the fourth parameter of the updated trained model to the parameter server 125. The worker device 122 receives a fifth parameter from the parameter server 125. The process repeats for a number of iteration until the parameters converge or a predetermined number of iteration is reached. This process may be repeated hundreds or thousands of times. In an example, several thousand (e.g. 3,000 to 5,000) iterations may be performed. Depending on the complexity of the model and the type and quantity of devices and data, more or fewer iterations may be performed. If new data is added to the training data, the device may retrain the model and request a new central parameter (and the process may be fully or partially repeated). The result of the training process is a model that may be able to accurately predict the classification given an unlabeled input. The model may be used on new data to generate, for example, a prediction or classification. In an example, for an image classification model, the worker device 122 identifies an object using the model and the fifth parameter.

In an embodiment, a learning scheme is provided to train a model on devices where the data is unbalanced, non-I.I.D, and cannot be shared between devices. In one embodiment, a central parameter server 125 receives parameters updates from devices, updates the latest central parameter state by linear interpolation and then, in turn, immediately transmits the latest central parameters to the device. The device in question then continues the training regime starting from this new updated parameter set.

Figure 2, as described above, depicts three worker devices 122 and a parameter server 125 that may be used for an asynchronous learning scheme. The three worker devices 122 and parameter servers 125 may be any type of device, for example, the device (both worker and parameter server) may be smartphones, navigation devices, vehicle systems, etc. Each of the worker devices 122 may include a sensor or input interface that collects data. Example of sensors may include a camera, LIDAR, radar, microphone, etc. Input interfaces may include, for example, a keyboard or touchscreen. The worker devices 122 locally store data that acquired using the sensor or input interface. The worker devices 122 further store a model. The model may include any type of model.

In the embodiment of Figure 2, worker units are all implemented as processes on distinct devices. Each worker unit is tasked with learning a computational graph model via gradient descent learning, as described above. A computational graph model includes a set of nodes where each node represents an operation to be performed. The graph model also includes a set of edges or connections between nodes that describe the data on which the operations is to be performed. Edges may include both carriers of data and also control function. A carrier of data describes, for example, where or how the output of one node becomes the input of another node. A control function provides a control function, for example, controlling IF an operation is to be implemented. In a computational graph model, embodiment, the parameter server 125 is represented by a process on another device housing the parameter update mechanism as described above. The local parameters each device sends are locally generated model parameters. A worker device first trains the locally stored model through gradient descent in a pre-arranged fashion (fixed or flexible number of epochs) and then sends the trained parameters to the device housing the process representing the parameter server 125. The parameter server 125 calculates an updated parameter and immediately sends the updated parameter back to the respective device. The parameter server 125 does not wait for additional devices to respond. Upon receipt of the updated parameters, the process representing that worker unit continues its training of the model locally using local data.

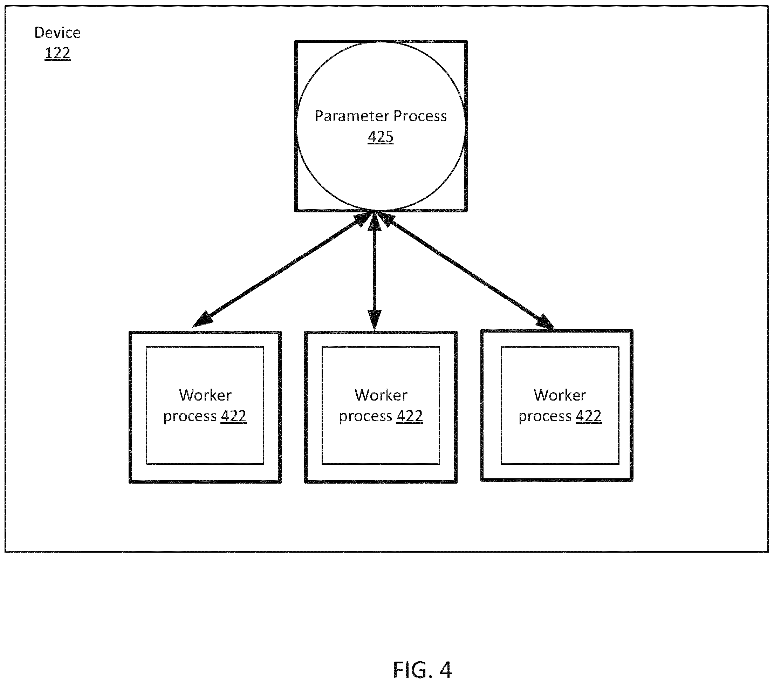

In another embodiment, all units (devices and parameters server) are implemented as processes on one and the same device, communicating over internal endpoints, for example, provided by ports in the Transmission Control Protocol (TCP) protocol. Figure 4 depicts an embodiment for parameter aggregation contained within a single device 122. The parameter server 125 is represented by a parameter process 425 that aggregates the central parameter vector as described and each of the one or more worker units is also represented by a worker process 422, each of which is tasked with learning a pre-agreed computational graph model with gradient descent learning. The parameter vectors sent are a fixed order of the model parameters of that computational graph model. Any worker unit process 422 first trains a local model on the data assigned to it. In some implementations, the data assigned to different such processes differs, in some other implementation certain processes share the pieces of data. Upon a pre-agreed set of rules (such as training said model for a precise number of epochs) each process representing a worker unit sends the parameter vector to the parameter process 425 representing the parameter server 125, which in turn updates the central parameter vector and return it to the sender in question. The process is repeated until the model is trained. The device 122 of Figure 4 may further communicate with other devices 122 or parameter servers 125 to further aggregate the parameters.

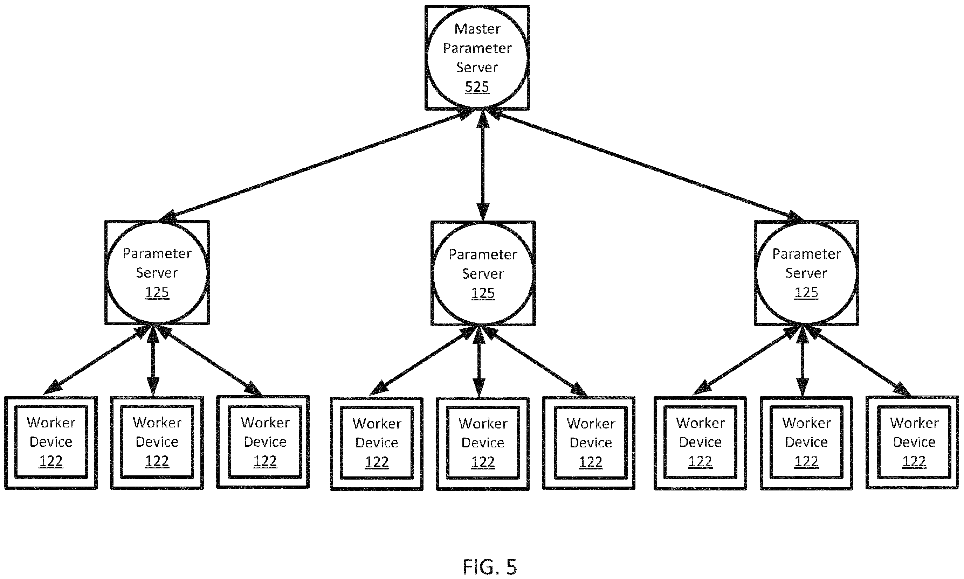

In another embodiment, the system includes a set of devices that only house a single worker unit processes each, partitioned into groups, each of which communicating the respective parameters with a separate parameter server 125 process that is co-located with a process representing a worker unit on a separate device as described in the example above. Figure 5 depicts an embodiment for aggregation by a hierarchy of parameters servers. There is not just a single parameter server 125, but the worker devices 122 and parameter servers 125 have been further partitioned into groups. Each parameter server 125 further transmits parameters to a master parameter server 525 to be aggregated.

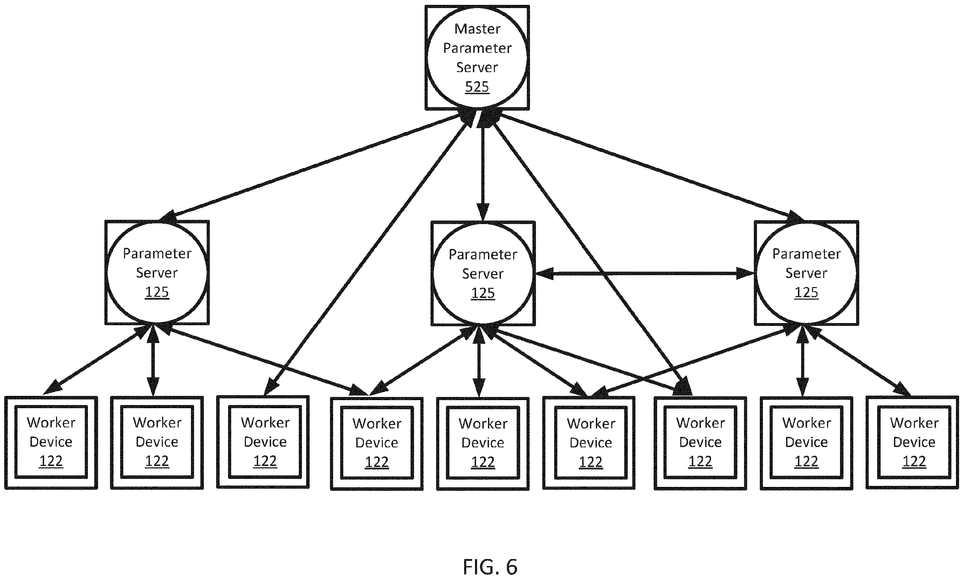

In another embodiment, the parameter server 125 and worker devices 122 are established as separate devices as described above, but the arrangement is not hierarchical as in the last example but can use different connections and layouts. Figure 6 depicts an example of non-hierarchal system. Each worker device 122, for example, may be able to communicate with different parameter servers 125. The parameter servers 125 may be located geographically or may only be able to handle a limited number of connections. Each parameter server 125 may only accept a predefined number of workers after which additional workers are turned away and directed to another parameter server 125. As in the above described example, the parameter servers 125 may communicate with higher level parameter servers and so on. A master parameter server 525 may communicate with worker devices 122. The parameter servers 125 may communicate with one another. Each component (worker device 122, parameter server 125, master parameter server 525) may be configured to function as either a worker or a parameter server 125.

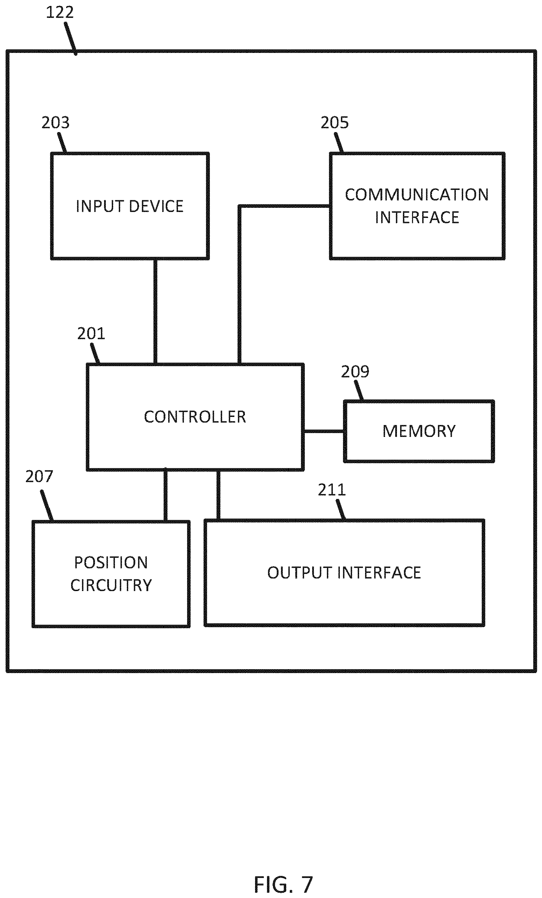

Figure 7 illustrates an example device 122 of the system of Figure 1. The device 122 may be configured to collect, transmit, receive, process, or display data. The device 122 is configured to train a locally stored model using locally stored data in conjunction with other devices 122. The device 122 may also be referred to as a probe 122, a mobile device 122, a navigation device 122, or a location aware device 122. The navigation device 122 includes a controller 201, a memory 209, an input device 203, a communication interface 205, position circuitry 207, and an output interface 211. The output interface 211 may present visual or non-visual information such as audio information. Additional, different, or fewer components are possible for the mobile device 122. The navigation device 122 may be smart phone, a mobile phone, a personal digital assistant (PDA), a tablet computer, a notebook computer, a personal navigation device (PND), a portable navigation device, and/or any other known or later developed mobile device. In an embodiment, a vehicle may be considered a device 122, or the device 122 may be integrated into a vehicle. The device 122 may receive or collect data from one or more sensors in or on the vehicle.

The device 122 may be configured to execute routing algorithms using a geographic database 123 to determine an optimum route to travel along a road network from an origin location to a destination location in a geographic region. Using input from an end user, the device 122 examines potential routes between the origin location and the destination location to determine the optimum route in light of user preferences or parameters. The device 122 may then provide the end user with information about the optimum route in the form of guidance that identifies the maneuvers required to be taken by the end user to travel from the origin to the destination location. Some devices 122 show detailed maps on displays outlining the route, the types of maneuvers to be taken at various locations along the route, locations of certain types of features, and so on.

The device 122 is configured to identify a starting location and a destination. The starting location and destination may be identified though the input device 203. The input device 203 may be one or more buttons, keypad, keyboard, mouse, stylus pen, trackball, rocker switch, touch pad, voice recognition circuit, or other device or component for inputting data to the mobile device 122. The input device 203 and the output interface 211 may be combined as a touch screen that may be capacitive or resistive. The output interface 211 may be a liquid crystal display (LCD) panel, light emitting diode (LED) screen, thin film transistor screen, or another type of display. The output interface 211 may also include audio capabilities, or speakers.

A positional point may be identified using positional circuitry such as GPS or other positional inputs. The positioning circuitry 207, which is an example of a positioning system, is configured to determine a geographic position of the device 122. In an embodiment, components as described herein with respect to the navigation device 122 may be implemented as a static device. The navigation device 122 may identify a position as the device travels along a route using the positional circuity. For indoor spaces without GPS signals, the navigation device 122 may rely on other geolocations methods such as LIDAR, radar, Wi-Fi, beacons, landmark identification, inertial navigation (dead reckoning), among others.

The device 122 may be configured to acquire data from one or more sensors (not shown). The device 122 may use different sensors such as cameras, microphones, LIDAR, radar, ultrasonic, or other sensors to acquire video, image, text, audio, or other types of data. The acquired data may be used for training one or more models stored on the device 122.

The device 122 may store one or more models in memory 209. The device 122 may be configured to train the model using locally acquired data and store model parameters in the memory 209. The memory 209 may be a volatile memory or a non-volatile memory. The memory 209 may include one or more of a read only memory (ROM), random access memory (RAM), a flash memory, an electronic erasable program read only memory (EEPROM), or other type of memory. The memory 209 may be removable from the mobile device 122, such as a secure digital (SD) memory card. The memory may contain a locally stored geographic database 123 or link node routing graph. The locally stored geographic database 123 may be a copy of the geographic database 123 or may include a smaller piece. The locally stored geographic database 123 may use the same formatting and scheme as the geographic database 123. The navigation device 122 may determine a route or path from a received or locally geographic database 123 using the controller 201. The controller 201 may include a general processor, a graphical processing unit (GPU), a digital signal processor, an application specific integrated circuit (ASIC), field programmable gate array (FPGA), analog circuit, digital circuit, combinations thereof, or other now known or later developed processor. The controller 201 may be a single device or combinations of devices, such as associated with a network, distributed processing, or cloud computing. The controller 201 may also include a decoder used to decode roadway messages and roadway locations.

The communication interface 205 may include any operable connection. An operable connection may be one in which signals, physical communications, and/or logical communications may be sent and/or received. An operable connection may include a physical interface, an electrical interface, and/or a data interface. The communication interface 205 provides for wireless and/or wired communications in any now known or later developed format. The communication interface 205 may include a receiver / transmitter for digital radio signals or other broadcast mediums. The communication interface 205 may be configured to communicate model parameters with a parameter server 125.

The navigation device 122 is further configured to request a route from the starting location to the destination. The navigation device 122 may further request preferences or information for the route. The navigation device 122 may receive updated ambiguity ratings or maps from the mapping platform 121 e.g. for geographic regions including the route. The navigation device 122 may communicate with the mapping platform 121 or other navigational service using the communication interface 205. The communication interface 205 may include any operable connection. An operable connection may be one in which signals, physical communications, and/or logical communications may be sent and/or received. An operable connection may include a physical interface, an electrical interface, and/or a data interface. The communication interface 205 provides for wireless and/or wired communications in any now known or later developed format. The communication interface 205 may include a receiver / transmitter for digital radio signals or other broadcast mediums. A receiver / transmitter may be externally located from the device 122 such as in or on a vehicle. The route and data associated with the route may be displayed using the output interface 211. The route may be displayed for example as a top down view or as an isometric projection.

In certain embodiments, the device 122 may be included in or embodied as an autonomous vehicle. As described herein, an autonomous driving vehicle may refer to a self-driving or driverless mode that no passengers are required to be on board to operate the vehicle. An autonomous driving vehicle may be referred to as a robot vehicle or an autonomous driving vehicle. The autonomous driving vehicle may include passengers, but no driver is necessary. Autonomous driving vehicles may park themselves or move cargo between locations without a human operator. Autonomous driving vehicles may include multiple modes and transition between the modes.

As described herein, a highly automated driving (HAD) vehicle may refer to a vehicle that does not completely replace the human operator. Instead, in a highly automated driving mode, the vehicle may perform some driving functions and the human operator may perform some driving functions. Vehicles may also be driven in a manual mode that the human operator exercises a degree of control over the movement of the vehicle. The vehicles may also include a completely driverless mode.

Other levels of automation are possible.

The autonomous or highly automated driving vehicle may include sensors for identifying the surrounding environment and location of the car. The sensors may include GNSS, light detection and ranging (LIDAR), radar, and cameras for computer vision. Proximity sensors may aid in parking the vehicle. The proximity sensors may detect the curb or adjacent vehicles. The autonomous or highly automated driving vehicle may optically track and follow lane markings or guide markings on the road.

In an embodiment, the model stored in the device may be used by the autonomous vehicle or navigation system to provide commands or instructions to the vehicle or user. The model may, for example, assist the vehicle or navigation system in identifying a position of the vehicle, identifying objects, and determining routes among other complex functions.

In an embodiment, the model may be used to determine depth prediction for car-mounted cameras. The model may predict the distance to objects accurately with only access to optical images. The model may be trained using local data on multiple devices that included both LIDAR and camera systems. The model may be deployed on cars that only include camera systems. The training data would include both the LIDAR data and optical images. The model minimization is calculated as the average difference in prediction of depth from camera and LIDAR.

In another embodiment, a model may be trained to estimate the weather at a location of a device based on sensor data. Other devices from different geographic regions/different sensor configurations may also learn to predict the weather. The model parameters are aggregated without sharing data to produce a generalized model. In this example, label of the data may be provided by a cloud-based weather service, downloaded to the devices, in areas with high accuracy in order to predict the weather in areas of poor accuracy/coverage of the cloud-based service. The result is a highly accurate and general model for weather prediction(estimation) on the device.

In another embodiment, a model that provides point of interest (POI) recommendations for customer's based on historical data or ETA of routes from logistics companies may be trained. The companies may be reluctant to share the data, due to its sensitivity from a privacy and business standpoint. In that case, the distributed, asynchronous machine learning algorithm may be deployed to share the model parameters rather than the data. The model may also be trained to provide recommendations, such as POIs, based on search data. Consumer behavior, e.g. searches and actions, may be kept private at the device while still helping train a model to provide better recommendation to other devices or consumers. In an example, a consumer or customer may search for a type of restaurant on their device. The consumer as a result of the search results makes a decision on where to go. The search and the results may be used as ground truth data to provide better recommendations for a future customer that may search on the same terms.

In another embodiment, a model may be trained for road sign detection. Training the model using distributed devices allows the model to have a huge quantity and diversity of data, which allows for a very general and accurate model to be trained. In another embodiment, a model may be trained to detect open parking spaces.

While the devices may only use local data to train the model or models, the devices may also access data or information from the mapping platform 121. The additional data from the mapping platform 121 may be used for navigation services or for labeling data in the training data sets.

The mapping platform 121 may include multiple servers, workstations, databases, and other machines connected and maintained by a map developer. The mapping platform 121 may be configured to receive data from devices 122 in the roadway. The mapping platform 121 may be configured to identify, verify, and augment features and locations of the features from the observational data. The mapping platform 121 may be configured to update a geographic database 123 with the features and locations. The mapping platform 121 may be configured to provide feature data and location data to devices 122. The mapping platform 121 may also be configured to generate routes or paths between two points (nodes) on a stored map. The mapping platform 121 may be configured to provide up to date information and maps to external geographic databases 123 or mapping applications. The mapping platform 121 may be configured to encode or decode map or geographic data. Feature data may be stored by the mapping platform 121 using geographic coordinates such as latitude, longitude, and altitude or other spatial identifiers. The mapping platform 121 may acquire data relating to the roadway though one or more devices 122.

The mapping platform 121 may be implemented in a cloud-based computing system or a distributed cloud computing service. The mapping platform 121 may include one or more server(s). A server may be a host for a website or web service such as a mapping service and/or a navigation service. The mapping service may provide maps generated from the geographic data of the database 123, and the navigation service may generate routing or other directions from the geographic data of the database 123. The mapping service may also provide information generated from attribute data included in the database 123. The server may also provide historical, future, recent or current traffic conditions for the links, segments, paths, or routes using historical, recent, or real time collected data. The server may receive updates from devices 122 or vehicles on the roadway regarding the HD map. The server may generate routing instructions for devices 122 as a function of HD map updates.

The mapping platform 121 includes the geographic database 123. To provide navigation related features and functions to the end user, the mapping platform 121 accesses the geographic database 123. The mapping platform 121 may update or annotate the geographic database 123 with new or changed features based on observational data from the plurality of devices 122. The plurality of devices 122 may also store a full or partial copy of the geographic database 123.

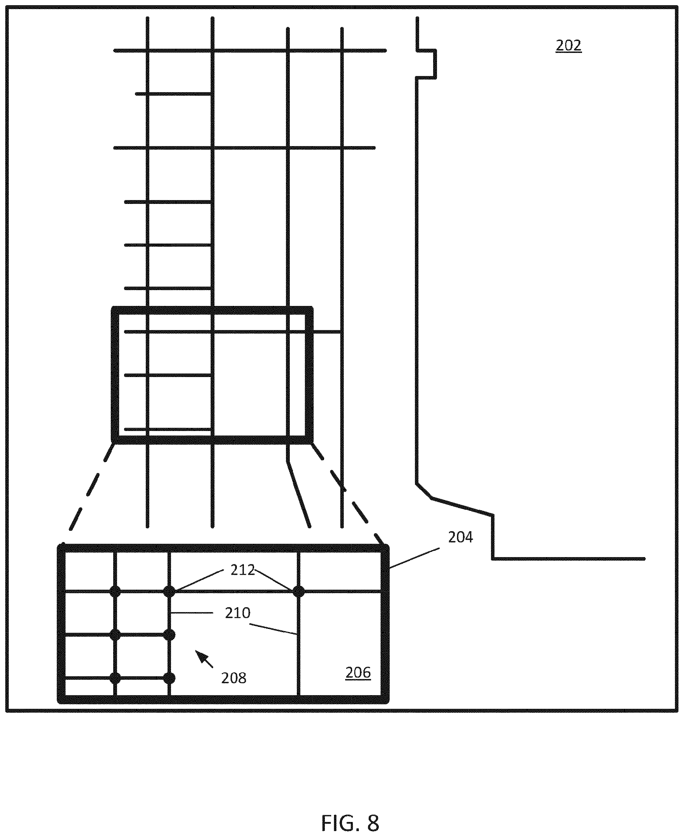

The geographic database 123 includes information about one or more geographic regions. Figure 8 illustrates a map of a geographic region 202. The geographic region 202 may correspond to a metropolitan or rural area, a state, a country, or combinations thereof, or any other area. Located in the geographic region 202 are physical geographic features, such as roads, points of interest (including businesses, municipal facilities, etc.), lakes, rivers, railroads, municipalities, etc.

Figure 8 further depicts an enlarged map 204 of a portion 206 of the geographic region 202. The enlarged map 204 illustrates part of a road network 208 in the geographic region 202. The road network 208 includes, among other things, roads and intersections located in the geographic region 202. As shown in the portion 206, each road in the geographic region 202 is composed of one or more road segments 210. A road segment 210 represents a portion of the road. Each road segment 210 is shown to have associated with it two nodes 212; one node represents the point at one end of the road segment and the other node represents the point at the other end of the road segment. The node 212 at either end of a road segment 210 may correspond to a location at which the road meets another road, i.e., an intersection, or where the road dead ends.

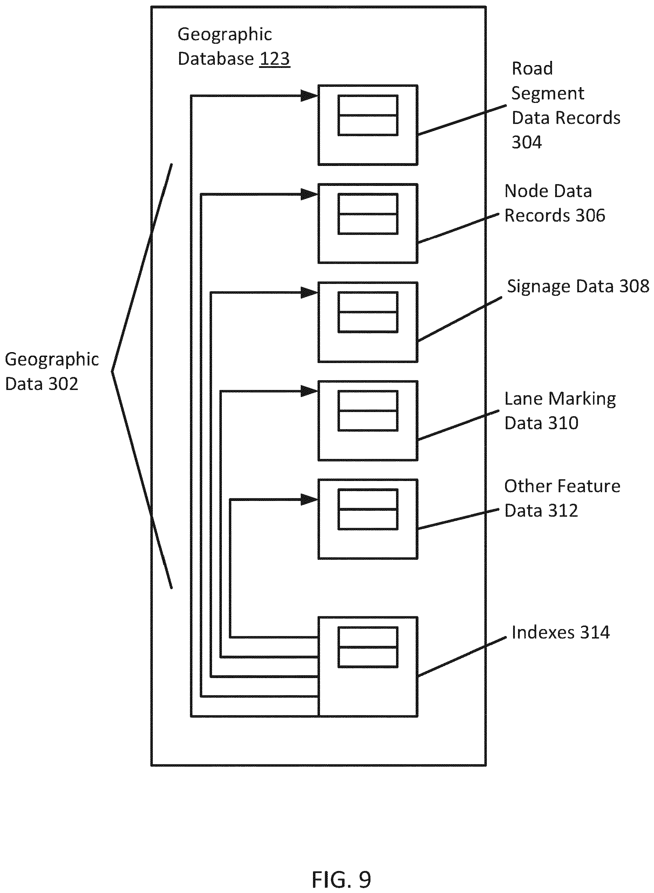

As depicted in Figure 9, in one embodiment, the geographic database 123 contains geographic data 302 that represents some of the geographic features in the geographic region 202 depicted in Figure 8. The data 302 contained in the geographic database 123 may include data that represent the road network 208. In Figure 9, the geographic database 123 that represents the geographic region 202 may contain at least one road segment database record 304 (also referred to as "entity" or "entry") for each road segment 210 in the geographic region 202. The geographic database 123 that represents the geographic region 202 may also include a node database record 306 (or "entity" or "entry") for each node 212 in the geographic region 202. The terms "nodes" and "segments" represent only one terminology for describing these physical geographic features, and other terminology for describing these features is intended to be encompassed within the scope of these concepts.

The geographic database 123 may include feature data 308-312. The feature data 308-312 may represent types of geographic features. For example, the feature data may include signage records 308 that identify the location of signage on the roadway. For example, the signage data 308 may include data for one or more signs (e.g. stop signs, yield signs, caution signs, etc.) that exist on the roadway network. The feature data may include lane features 310 that indicate lane marking on the roadway. The other kinds of feature data 312 may include point of interest data or other roadway features. The point of interest data may include point of interest records comprising a type (e.g., the type of point of interest, such as restaurant, fuel station, hotel, city hall, police station, historical marker, ATM, golf course, truck stop, vehicle chain-up stations etc.), location of the point of interest, a phone number, hours of operation, etc. The feature data may also include painted signs on the road, traffic signal, physical and painted features like dividers, lane divider markings, road edges, center of intersection, stop bars, overpasses, overhead bridges etc. The feature data may be identified from data received by the devices 122. More, fewer or different data records can be provided. In one embodiment, additional data records (not shown) can include cartographic ("carto") data records, routing data, and maneuver data.

The feature data 308-312 may include HD mapping data that may model road surfaces and other map features to decimeter or centimeter-level or better accuracy. An HD map database may include locations data in three dimensions with a spatial resolution of at least a threshold distance to pixel ratio. Example threshold distance ratios include 30 centimeters per pixel (i.e., each pixel in the image for the HD map represents 30 centimeters in the three-dimensional space), 20 centimeters per pixel, or other values. The HD maps may be defined according to the Open Lane Model of the Navigation Data Standard (NDS). The feature data 308-312 may also include lane models that provide the precise lane geometry with lane boundaries, as well as rich attributes of the lane models. The rich attributes include, but are not limited to, lane traversal information, lane types, lane marking types, lane level speed limit information, and/or the like. In one embodiment, the feature data 308-312 are divided into spatial partitions of varying sizes to provide HD mapping data to vehicles 101 and other end user devices 122 with near real-time speed without overloading the available resources of the devices 122 (e.g., computational, memory, bandwidth, etc. resources). The feature data 308-312 may be created from high-resolution 3D mesh or point-cloud data generated, for instance, from LIDAR-equipped vehicles. The 3D mesh or point-cloud data are processed to create 3D representations of a street or geographic environment at decimeter or centimeter-level accuracy for storage in the feature data 308-312. The feature data 308-312 may also include data the is useful for machine learning or computer vision, but not readily attribution to easy categorization as human-recognizable features.

In an embodiment, the feature data 308-312 also include real-time sensor data collected from probe vehicles in the field. The real-time sensor data, for instance, integrates real-time road event data, traffic information, weather, and road conditions (e.g., potholes, road friction, road wear, etc.) with highly detailed 3D representations of street and geographic features to provide precise real-time feature detection at decimeter or centimeter-level accuracy. Other sensor data can include vehicle telemetry or operational data such as windshield wiper activation state, braking state, steering angle, accelerator position, and/or the like.

The geographic database 123 also includes indexes 314. The indexes 314 may include various types of indexes that relate the different types of data to each other or that relate to other aspects of the data contained in the geographic database 123. For example, the indexes 314 may relate the nodes in the node data records 306 with the end points of a road segment in the road segment data records 304. As another example, the indexes 314 may relate feature data such as the signage records 308 with a road segment in the segment data records 304 or a geographic coordinate. The indexes 314 may also store repeating geometry patterns or relationships for links or nodes that represent repeating geometry patterns.

The geographic database 123 may be maintained by a content provider (e.g., a map developer). By way of example, the map developer may collect geographic data to generate and enhance the geographic database 123. The map developer may obtain data from sources, such as businesses, municipalities, or respective geographic authorities. In addition, the map developer may employ field personnel to travel throughout the geographic region to observe features and/or record information about the roadway. Also, remote sensing, such as aerial or satellite photography, can be used.

The geographic database 123 and the data stored within the geographic database 123 may be licensed or delivered on-demand. Other navigational services or traffic server providers may access the traffic data and the regulatory data stored in the geographic database 123. Data including regulation data may be broadcast as a service.

The term "computer-readable medium" includes a single medium or multiple media, such as a centralized or distributed database, and/or associated caches and servers that store one or more sets of instructions. The term "computer-readable medium" shall also include any medium that is capable of storing, encoding, or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random-access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative embodiment, dedicated hardware implementations, such as application specific integrated circuits, GPUs programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in the specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

As used in the application, the term 'circuitry' or 'circuit' refers to all of the following: (a)hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

Processors suitable for the execution of a computer program include, by way of example, both general and special purpose microprocessors, and anyone or more processors of any kind of digital computer. Generally, a processor receives instructions and data from a read only memory or a random-access memory or both. The essential elements of a computer are a processor for performing instructions and one or more memory devices for storing instructions and data. Generally, a computer also includes, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a GPS receiver, to name just a few. Computer readable media suitable for storing computer program instructions and data include all forms of non-volatile memory, media, and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The memory may be a non-transitory medium such as a ROM, RAM, flash memory, etc. The processor and the memory can be supplemented by, or incorporated in, special purpose logic circuitry.

To provide for interaction with a user, embodiments of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous.

## Claims

1. A device (122) for training a model, the device comprising:

   at least one sensor configured to acquire a plurality of data instances;
   a communication interface (205) configured to communicate with a parameter server (125); and
   a device processor configured to train the model using a threshold quantity of the data instances of the plurality of data instances;
   the device processor further configured to transmit a parameter vector of the trained model to the parameter server (125) and receive in response, an updated central parameter vector from the parameter server (125) derived from the model;
   the device processor further configured to retrain the model using the updated central parameter vector;
   wherein the parameter server sets the threshold quantity to regulate the frequency and/or number of transmissions from the device;
   wherein the at least one sensor acquires different data instances than other sensors of the other devices (122) that are training respective models;

wherein at least one transmission between the device and the parameter server occurs asynchronously with respect to the other devices that are communicating with the parameter server and training respective models;

wherein the device processor is configured to over sample or under sample the plurality of data instances such that when a number of data instances available to the device processor to train the model is larger than the threshold quantity, the device processor samples the threshold quantity of data instances, and when the number of data instances available to the device processor is smaller than the threshold quantity, the device processor samples all of the data instances of the plurality of data instances and then resamples one or more of the data instances until the threshold quantity is reached; and

wherein the device processor transmits the parameter vector of the trained model after having processed the threshold quantity of the data instances.

2. The device (122) of claim 1, wherein the device processor is further configured to receive in response to the transmission of the parameter vector to the parameter server(125), an updated threshold quantity from the parameter server (125), wherein the device processor is further configured to retrain using the updated threshold quantity of the data instances of the plurality of data instances.

3. The device (122) of claim 2, wherein the device processor is configured to over sample or under sample the plurality of data instances so that when a number of data instances available to the device processor is larger than the updated threshold quantity, the device processor samples the updated threshold quantity of data instances and when the number of data instances available to the device processor is smaller than the updated threshold quantity, the device processor samples all of the data instances of the plurality of data instances and then resamples one or more of the data instances until the updated threshold quantity is reached.

4. The device (122) of claim 2, wherein the updated threshold quantity is calculated as a function of a number of updates transmitted by the device to the parameter server (125) compared to a predetermined number of updates from all devices.

5. The device (122) of claim 2, wherein the updated threshold quantity is calculated as a function of a first parameter and the threshold quantity.

6. The device of claim 1, wherein the plurality of data instances is image data, and the model is trained to identify a position of the device.

7. The device (122) of claim 1, wherein the plurality of data instances is search text data, and the model is trained to recommend a point of interest based on the search text data.

8. The device (122) of claim 1, wherein training the model includes a gradient descent-based process.

9. The device (122) of claim 1, wherein the at least one sensor is coupled with a vehicle.

10. The device (122) of claim 1, wherein the model comprises a generative adversarial network, wherein the device processor is configured to train the model using an adversarial training process.

11. The device of claim 1, wherein the plurality of data instances is labeled, and the model is trained using a supervised training process.

12. The device (122) of claim 1, wherein the updated central parameter is transmitted to the device prior to the updated central parameter being altered again.

13. A method for training a model using a plurality of distributed worker devices (122), the method comprising:

identifying (A110), by a worker device (122), a plurality of data instances;

selecting (A120), by the worker device (122), a first set of data instances from the plurality of data instances as a function of a threshold quantity received from a parameter server (125);

training (A130), by the worker device (122), the model using the first set of data instances and a set of first parameters;

transmitting (A140), by the worker device (122), a set of second parameters of the trained model to the parameter server (125);

receiving (A150), by the worker device (122), a set of third parameters from the parameter server (125) and an updated threshold quantity, wherein the set of third parameters is calculated at least partially as a function of the set of second parameters;

selecting (A160), by the worker device (122), a second set of data instances from the plurality of data instances as a function of the updated threshold quantity received from the parameter server (125); and

training (A170), by the worker device (122), the model using the second set of data instances and the set of third parameters,

wherein the parameter server sets the threshold quantity to regulate the frequency and/or number of transmissions from the device; wherein selecting the first set of data instances comprises over sampling or under sampling the plurality of data instances such that when a number of data instances available to the worker device (122) to train the model is larger than the threshold quantity, the worker device (122) samples the threshold quantity of data instances, and when the number of data instances available to the worker device (122) is smaller than the threshold quantity, the worker device (122) samples all of the data instances of the plurality of data instances and then resamples one or more of the data instances until the threshold quantity is reached; and wherein the transmitting of the set of second parameters is done after having processed, by the worker device, the threshold quantity of the data instances.

14. A computer-readable, non-transitory medium storing a program that causes a computer to execute the method of claim 13.

**Patentansprüche**

1. Vorrichtung (122) zum Trainieren eines Modells, wobei die Vorrichtung Folgendes umfasst:

   mindestens einen Sensor, der dazu konfiguriert ist, eine Vielzahl von Dateninstanzen zu erfassen;
   eine Kommunikationsschnittstelle (205), die konfiguriert ist, um mit einem Parameterserver (125) zu kommunizieren; und
   einen Vorrichtungsprozessor, der dazu konfiguriert ist, das Modell unter Verwendung einer Schwellenmenge der Dateninstanzen der Vielzahl von Dateninstanzen zu trainieren;
   wobei der Vorrichtungsprozessor ferner dazu konfiguriert ist, einen Parametervektor des trainierten Modells an den Parameterserver (125) zu übertragen und als Antwort einen aktualisierten zentralen Parametervektor von dem Parameterserver (125) zu empfangen, der von dem Modell abgeleitet ist;
   wobei der Vorrichtungsprozessor ferner dazu konfiguriert ist, das Modell unter Verwendung des aktualisierten zentralen Parametervektors neu zu trainieren;
   wobei der Parameterserver die Schwellengröße einstellt, um die Frequenz und/oder Anzahl von Übertragungen von der Vorrichtung zu regulieren;
   wobei der mindestens eine Sensor andere Dateninstanzen erfasst als andere Sensoren der anderen Vorrichtungen (122), die jeweilige Modelle trainieren;
   wobei zumindest eine Übertragung zwischen der Vorrichtung und dem Parameterserver asynchron zu den anderen Vorrichtungen erfolgt, die mit dem Parameterserver kommunizieren und jeweilige Modelle trainieren;
   wobei der Vorrichtungsprozessor dazu konfiguriert ist, die Vielzahl von Dateninstanzen zu überabtasten oder zu unterabtasten, so dass, wenn eine Anzahl von Dateninstanzen, die dem Vorrichtungsprozessor zum Trainieren des Modells zur Verfügung stehen, größer als die Schwellenmenge ist, der Vorrichtungsprozessor die Schwellenmenge von Dateninstanzen abtastet, und wenn die Anzahl der für den Vorrichtungsprozessor verfügbaren Dateninstanzen kleiner als die Schwellenmenge ist, der Vorrichtungsprozessor alle Dateninstanzen der Vielzahl von Dateninstanzen abtastet und dann eine oder mehrere der Dateninstanzen erneut abtastet, bis die Schwellenmenge erreicht ist; und
   wobei der Vorrichtungsprozessor den Parametervektor des trainierten Modells überträgt, nachdem er die Schwellenmenge der Dateninstanzen verarbeitet hat.

2. Vorrichtung (122) nach Anspruch 1, wobei der Vorrichtungsprozessor ferner konfiguriert ist, um als Reaktion auf die Übertragung des Parametervektors an den Parameterserver (125) eine aktualisierte Schwellengröße von dem Parameterserver (125) zu empfangen, wobei der Vorrichtungsprozessor ferner dazu konfiguriert ist, unter Verwendung der aktualisierten Schwellenmenge der Dateninstanzen der Vielzahl von Dateninstanzen neu zu trainieren.

3. Vorrichtung (122) nach Anspruch 2, wobei der Vorrichtungsprozessor so konfiguriert ist, dass er die Vielzahl von Dateninstanzen überabtastet oder unterabtastet, so dass, wenn eine Anzahl von Dateninstanzen, die dem Vorrichtungsprozessor zur Verfügung stehen, größer als die aktualisierte Schwellenmenge ist, der Vorrichtungsprozessor die aktualisierte Schwellenmenge von Dateninstanzen abtastet, und wenn die Anzahl der für den Vorrichtungsprozessor verfügbaren Dateninstanzen kleiner als die aktualisierte Schwellenmenge ist, der Vorrichtungsprozessor alle Dateninstanzen der Vielzahl von Dateninstanzen abtastet und dann eine oder mehrere der Dateninstanzen erneut abtastet, bis die aktualisierte Schwellenmenge erreicht ist.

4. Vorrichtung (122) nach Anspruch 2, wobei die aktualisierte Schwellengröße als eine Funktion einer Anzahl von Aktualisierungen berechnet wird, die von der Vorrichtung an den Parameterserver (125) übertragen werden, verglichen mit einer vorbestimmten Anzahl von Aktualisierungen von allen Vorrichtungen.

5. Vorrichtung (122) nach Anspruch 2, wobei die aktualisierte Schwellengröße als eine Funktion eines ersten Parameters und der Schwellengröße berechnet wird.

6. Vorrichtung nach Anspruch 1, wobei die Vielzahl von Dateninstanzen Bilddaten sind und das Modell darauf trainiert ist, eine Position der Vorrichtung zu identifizieren.

7. Vorrichtung (122) nach Anspruch 1, wobei die Vielzahl von Dateninstanzen Suchtextdaten sind und das Modell darauf trainiert ist, basierend auf den Suchtextdaten einen Punkt von Interesse zu empfehlen.

8. Vorrichtung (122) nach Anspruch 1, wobei das Trainieren des Modells einen auf Gradientenabstieg basierenden Prozess umfasst.

9. Vorrichtung (122) nach Anspruch 1, wobei der mindestens eine Sensor mit einem Fahrzeug gekoppelt ist.

10. Vorrichtung (122) nach Anspruch 1, wobei das Modell ein generatives gegnerisches Netzwerk umfasst, wobei der Vorrichtungsprozessor dazu konfiguriert ist, das Modell unter Verwendung eines kontradiktorischen Trainingsprozesses zu trainieren.

11. Vorrichtung nach Anspruch 1, wobei die Vielzahl von Dateninstanzen gekennzeichnet ist und das Modell unter Verwendung eines überwachten Trainingsprozesses trainiert wird.

12. Vorrichtung (122) nach Anspruch 1, wobei der aktualisierte zentrale Parameter an die Vorrichtung übertragen wird, bevor der aktualisierte zentrale Parameter erneut geändert wird.

13. Verfahren zum Trainieren eines Modells unter Verwendung einer Vielzahl von verteilten Arbeitsvorrichtungen (122), wobei das Verfahren Folgendes umfasst:

Identifizieren (A110) einer Vielzahl von Dateninstanzen durch eine Arbeitsvorrichtung (122);
Auswählen (A120) eines ersten Satzes von Dateninstanzen aus der Vielzahl von Dateninstanzen durch die Arbeitsvorrichtung (122) als Funktion einer von einem Parameterserver (125) empfangenen Schwellengröße;
Trainieren (A130) des Modells unter Verwendung des ersten Satzes von Dateninstanzen und eines Satzes von ersten Parametern durch die Arbeitsvorrichtung (122);
Übertragen (A140) durch die Arbeitsvorrichtung (122) eines Satzes von zweiten Parametern des trainierten Modells an den Parameterserver (125);
Empfangen (A150) durch die Arbeitsvorrichtung (122) eines Satzes dritter Parameter von dem Parameterserver (125) und einer aktualisierten Schwellenmenge, wobei der Satz dritter Parameter zumindest teilweise als Funktion des Satzes zweiter Parameter berechnet wird;
Auswählen (A160) eines zweiten Satzes von Dateninstanzen aus der Vielzahl von Dateninstanzen durch die Arbeitsvorrichtung (122) als eine Funktion der aktualisierten Schwellenwertmenge, die von dem Parameterserver (125) empfangen wurde; und
Trainieren (A170) des Modells unter Verwendung des zweiten Satzes von Dateninstanzen und des Satzes dritter Parameter durch die Arbeitsvorrichtung (122),
wobei der Parameterserver die Schwellengröße einstellt, um die Frequenz und/oder Anzahl von Übertragungen von der Vorrichtung zu regulieren;
wobei das Auswählen des ersten Satzes von Dateninstanzen ein Überabtasten oder Unterabtasten der Vielzahl von Dateninstanzen umfasst, so dass, wenn eine Anzahl von Dateninstanzen, die der Arbeitsvorrichtung (122) zum Trainieren des Modells zur Verfügung stehen, größer als die Schwellenmenge ist, die Arbeitsvorrichtung (122) die Schwellenmenge von Dateninstanzen abtastet, und wenn die Anzahl der für die Arbeitsvorrichtung (122) verfügbaren Dateninstanzen kleiner als die Schwellenmenge ist, die Arbeitsvorrichtung (122) alle Dateninstanzen der Vielzahl von Dateninstanzen abtastet und dann eine oder mehrere der Dateninstanzen erneut abtastet, bis die Schwellenmenge erreicht ist; und
wobei das Übertragen des Satzes von zweiten Parametern erfolgt, nachdem durch die Arbeitsvorrichtung die Schwellenmenge der Dateninstanzen verarbeitet wurde.

14. Computerlesbares, nichtflüchtiges Medium, das ein Programm speichert, das einen Computer veranlasst, das Verfahren nach Anspruch 13 auszuführen.

**Revendications**

1. Dispositif (122) pour former un modèle, le dispositif comprenant :

au moins un capteur configuré pour acquérir une pluralité d'instances de données ;

une interface de communication (205) configurée pour communiquer avec un serveur de paramètres (125) ; et

un processeur de dispositif configuré pour former le modèle à l'aide d'une quantité seuil des instances de données de la pluralité d'instances de données ;

le processeur de dispositif étant en outre configuré pour transmettre un vecteur de paramètres du modèle formé au serveur de paramètres (125) et recevoir, en réponse, un vecteur de paramètres central mis à jour en provenance du serveur de paramètres (125) dérivé du modèle ;

le processeur de dispositif étant en outre configuré pour effectuer une nouvelle formation du modèle à l'aide du vecteur de paramètres central mis à jour ;

dans lequel le serveur de paramètres définit la quantité seuil pour réguler la fréquence et/ou le nombre de transmissions depuis le dispositif ;

dans lequel l'au moins un capteur acquiert des instances de données différentes des autres capteurs des autres dispositifs (122) qui forment des modèles respectifs ;

dans lequel au moins une transmission entre le dispositif et le serveur de paramètres se produit de manière asynchrone par rapport aux autres dispositifs qui communiquent avec le serveur de paramètres et forment les modèles respectifs ;

dans lequel le processeur de dispositif est configuré pour suréchantillonner ou sous-échantillonner la pluralité d'instances de données de sorte que lorsqu'un nombre d'instances de données disponibles pour le processeur de dispositif pour former le modèle est supérieur à la quantité seuil, le processeur de dispositif échantillonne la quantité seuil d'instances de données, et lorsque le nombre d'instances de données disponibles pour le processeur de dispositif est inférieur à la quantité seuil, le processeur de dispositif échantillonne l'ensemble des instances de données de la pluralité d'instances de données, puis rééchantillonne une ou plusieurs des instances de données jusqu'à ce que la quantité seuil soit atteinte ; et

dans lequel le processeur de dispositif transmet le vecteur de paramètres du modèle formé après avoir traité la quantité seuil des instances de données.

2. Dispositif (122) selon la revendication 1, dans lequel le processeur de dispositif est en outre configuré pour recevoir, en réponse à la transmission du vecteur de paramètres au serveur de paramètres (125), une quantité seuil mise à jour en provenance du serveur de paramètres (125), dans lequel le processeur de dispositif est en outre configuré pour effectuer une nouvelle formation à l'aide de la quantité seuil mise à jour des instances de données de la pluralité d'instances de données.

3. Dispositif (122) selon la revendication 2, dans lequel le processeur de dispositif est configuré pour suréchantillonner ou sous-échantillonner la pluralité d'instances de données de sorte que, lorsqu'un nombre d'instances de données disponibles pour le processeur de dispositif est supérieur à la quantité seuil mise à jour, le processeur de dispositif échantillonne la quantité seuil mise à jour d'instances de données, et lorsque le nombre d'instances de données disponibles pour le processeur de dispositif est inférieur à la quantité seuil mise à jour, le processeur de dispositif échantillonne l'ensemble des instances de données de la pluralité d'instances de données, puis rééchantillonne une ou plusieurs des instances de données jusqu'à ce que la quantité seuil mise à jour soit atteinte.

4. Dispositif (122) selon la revendication 2, dans lequel la quantité seuil mise à jour est calculée en fonction d'un nombre de mises à jour transmises par le dispositif au serveur de paramètres (125) par rapport à un nombre prédéterminé de mises à jour de tous les dispositifs.

5. Dispositif (122) selon la revendication 2, dans lequel la quantité seuil mise à jour est calculée en fonction d'un premier paramètre et de la quantité seuil.

6. Dispositif selon la revendication 1, dans lequel la pluralité d'instances de données sont des données d'image, et le modèle est formé pour identifier une position du dispositif.

7. Dispositif (122) selon la revendication 1, dans lequel la pluralité d'instances de données sont des données de texte de recherche, et le modèle est formé pour recommander un point d'intérêt sur la base des données de texte de recherche.

8. Dispositif (122) selon la revendication 1, dans lequel l'apprentissage du modèle comporte un processus basé sur la descente de gradient.

9. Dispositif (122) selon la revendication 1, dans lequel l'au moins un capteur est couplé à un véhicule.

10. Dispositif (122) selon la revendication 1, dans lequel le modèle comprend un réseau contradictoire génératif, dans lequel le processeur de dispositif est configuré pour former le modèle à l'aide d'un processus de formation contradictoire.

11. Dispositif selon la revendication 1, dans lequel la pluralité d'instances de données est étiquetée, et le modèle est formé à l'aide d'un processus de formation supervisé.

12. Dispositif (122) selon la revendication 1, dans lequel le paramètre central mis à jour est transmis au dispositif avant que le paramètre central mis à jour ne soit à nouveau modifié.

13. Procédé de formation d'un modèle à l'aide d'une pluralité de dispositifs de travail distribués (122), le procédé comprenant :

l'identification (A110), par un dispositif de travail (122), d'une pluralité d'instances de données ;
la sélection (A120), par le dispositif de travail (122), d'un premier ensemble d'instances de données parmi la pluralité d'instances de données en fonction d'une quantité seuil reçue en provenance d'un serveur de paramètres (125) ;
la formation (A130), par le dispositif de travail (122), du modèle à l'aide du premier ensemble d'instances de données et d'un ensemble de premiers paramètres ;
la transmission (A140), par le dispositif de travail (122), d'un ensemble de deuxièmes paramètres du modèle formé au serveur de paramètres (125) ;
la réception (A150), par le dispositif de travail (122), d'un ensemble de troisièmes paramètres en provenance du serveur de paramètres (125) et d'une quantité seuil mise à jour, dans lequel l'ensemble de troisièmes paramètres est calculé au moins partiellement en fonction de l'ensemble de deuxièmes paramètres ;
la sélection (A160), par le dispositif de travail (122), d'un second ensemble d'instances de données parmi la pluralité d'instances de données en fonction de la quantité seuil mise à jour reçue en provenance du serveur de paramètres (125) ;
et
la formation (A170), par le dispositif de travail (122), du modèle à l'aide du second ensemble d'instances de données et de l'ensemble de troisièmes paramètres,
dans lequel le serveur de paramètres définit la quantité seuil pour réguler la fréquence et/ou le nombre de transmissions depuis le dispositif ;
dans lequel la sélection du premier ensemble d'instances de données comprend un suréchantillonnage ou un sous-échantillonnage de la pluralité d'instances de données de sorte que, lorsqu'un nombre d'instances de données disponibles pour le dispositif de travail (122) pour former le modèle est supérieur à la quantité seuil, le dispositif de travail (122) échantillonne la quantité seuil d'instances de données, et lorsque le nombre d'instances de données disponibles pour le dispositif de travail (122) est inférieur à la quantité seuil, le dispositif de travail (122) échantillonne l'ensemble des instances de données de la pluralité d'instances de données puis rééchantillonne une ou plusieurs des instances de données jusqu'à ce que la quantité seuil soit atteinte ; et
dans lequel la transmission de l'ensemble de deuxièmes paramètres est effectuée après avoir traité, par le dispositif de travail, la quantité seuil des instances de données.

14. Support non transitoire lisible par ordinateur stockant un programme qui amène un ordinateur à exécuter le procédé selon la revendication 13.

FIG. 1

Worker Device
122

Worker Device
122

Worker Device
122

Parameter Server
125

FIG. 2

A110 — | Acquire data instances |

A120 — | Select set of data instances |

A130 — | Train a model using the selected set and a starting parameter |

A140 — | Transmit parameter from the trained model to a parameter server |

A150 — | Receive new starting parameter from the parameter server |

A160 — | Select second set of data instances |

A170 — | Train the model using the second set and new starting parameter |

FIG. 3

EP 3 726 439 B1

Device
122

Parameter Process
425

Worker
process 422

Worker
process 422

Worker
process 422

FIG. 4

FIG. 5

FIG. 6

122

203

INPUT DEVICE

205

COMMUNICATION INTERFACE

201

CONTROLLER

209

MEMORY

207

POSITION CIRCUITRY

211

OUTPUT INTERFACE

FIG. 7

FIG. 8

Geographic
Database 123

Road
Segment
Data Records
304

Node Data
Records 306

Signage Data 308

Geographic
Data 302

Lane Marking
Data 310

Other Feature
Data 312

Indexes 314

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018240011 A

**Non-patent literature cited in the description**

- Wireless Network Intelligence at the Edge. **JIHONG PARK et al.** ARXIV.ORG. CORNELL UNIVERSITY LIBRARY, 201 OLIN LIBRARY CORNELL UNIVERSITY ITHACA, 07 December 2018

- Asynchronous Federated Optimization. **CONG XIE et al.** ARXIV.ORG. CORNELL UNIVERSITY LIBRARY, 201 OLIN LIBRARY CORNELL UNIVERSITY ITHACA, 10 March 2019